# EUROPEAN PATENT APPLICATION

(11) **EP 4 221 441 A1**
(43) Date of publication of application: **02.08.2023**
(21) Application number: 22153954.7
(22) Date of filing: 28.01.2022
(51) Int. Cl.: H04W 76/12, H04W 76/16, H04L 67/141, H04L 45/24, H04W 28/08

(54) **EXTERNAL STEERING OF ACCESS TRAFFIC MULTIPATH COMMUNICATION IN MOBILE COMMUNICATION SYSTEMS**

(71) Applicant: Nokia Technologies Oy, 02610 Espoo (FI)
(72) Inventor: HE, Mu, 80639 Munich (DE); LIEBHART, Rainer, 81476 Munich (DE); CHANDRAMOULI, Devaki, Texas, 75025 (US); GKELLAS, Georgios, 13232 Petroupoli (GR); THIEBAUT, Laurent, 92160 Antony (FR); GKATZIKIS, Lazaros, 92130 Issy-les-moulineaux (FR)
(74) Representative: TBK

(57) **Abstract**

There are provided measures for enabling/realizing external steering of access traffic multipath communication in a mobile communication system, e.g. an external access traffic multipath communication steering function. Some such measures comprise that a session management function element or instance in a mobile communication system initiates control of establishment of at least one user plane session for access traffic multipath communication, obtains communication information of an external steering function element or instance to be used for steering access traffic multipath communication in the at least one user plane session, creates access traffic multipath communication rules, forwarding action rules and multi access rules for access traffic multipath communication in the at least one user plane session, and provides the access traffic multipath communication rules and the communication information of the external steering function element or instance to the communication function element or instance.

## Description

### Field

Various example embodiments described herein generally relate to external steering of access traffic multipath communication in mobile communication systems.

### Background

In the context of access traffic multipath communication in mobile communication systems, situations may arise in which certain configurations thereof may present a challenge to implement one or more upgrades on an individual basis. Therefore, improvements to certain measures/mechanisms for enabling/realizing external steering of access traffic multipath communication in mobile communication systems is desired.

### Summary

Various example embodiments address issues, problems and/or drawbacks described herein as well as those recognized by a person skilled in the art.

Various aspects of example embodiments are set out in the appended claims.

At least one example embodiment relates to measures/mechanisms (including methods, apparatuses (e.g. devices, entities, elements, instances, and/or functions) and computer program products) for enabling/realizing external steering of access traffic multipath communication in a mobile communication system (e.g. an external access traffic multipath communication steering function).

According to a first aspect, there is provided a method of (or, stated differently, operable or for use in/by) a session management function element or instance in a mobile communication system, comprising: initiating control of establishment of at least one user plane session for access traffic multipath communication across multiple accesses via different access paths between a communication function element or instance and at least one user plane function element or instance, obtaining communication information of an external steering function element or instance to be used for steering access traffic multipath communication in the at least one user plane session, said external steering function element or instance located outside of and connected to the at least one user plane function element or instance, creating access traffic multipath communication rules, forwarding action rules and multi access rules for access traffic multipath communication in the at least one user plane session, and providing the access traffic multipath communication rules and the communication information of the external steering function element or instance to the communication function element or instance, the forwarding action rules to the at least one user plane function element or instance, and the multi access rules to the steering function element or instance.

According to a second aspect, there is provided an apparatus of (or, differently, operable or for use in/by) a session management function element or instance in a mobile communication system, comprising: means for initiating control of establishment of at least one user plane session for access traffic multipath communication across multiple accesses via different access paths between a communication function element or instance and at least one user plane function element or instance, means for obtaining communication information of an external steering function element or instance to be used for steering access traffic multipath communication in the at least one user plane session, said external steering function element or instance located outside of and connected to the at least one user plane function element or instance, means for creating access traffic multipath communication rules, forwarding action rules and multi access rules for access traffic multipath communication in the at least one user plane session, and means for providing the access traffic multipath communication rules and the communication information of the external steering function element or instance to the communication function element or instance, the forwarding action rules to the at least one user plane function element or instance, and the multi access rules to the steering function element or instance.

According to a third aspect, there is provided an apparatus of (or, stated differently, operable or for use in/by) a session management function element or instance in a mobile communication system, the apparatus comprising at least one processor and at least one memory including computer program code, wherein the processor, with the at least one memory and the computer program code, is configured to cause the apparatus to perform: initiating control of establishment of at least one user plane session for access traffic multipath communication across multiple accesses via different access paths between a communication function element or instance and at least one user plane function element or instance, obtaining communication information of an external steering function element or instance to be used for steering access traffic multipath communication in the at least one user plane session, said external steering function element or instance located outside of and connected to the at least one user plane function element or instance, creating access traffic multipath communication rules, forwarding action rules and multi access rules for access traffic multipath communication in the at least one user plane session, and providing the access traffic multipath communication rules and the communication information of the external steering function element or instance to the communication function element or instance, the forwarding action rules to the at least one user plane function element or instance, and the multi access rules to the steering function element or instance.

According to various developments/modifications, any one of the aforementioned first to third aspects may include one or more of the following:
said initiating comprises determining to use an external steering function element or instance for steering access traffic multipath communication in the at least one user plane session,
said initiating comprises discovering and/or selecting an external steering function element or instance for steering access traffic multipath communication in the at least one user plane session,
said determining is based on an indication of preferred or requested usage of an external steering function element or instance from the communication function element or instance,
said determining is based on capability information of the at least one user plane function element or instance, indicating that the at least one user plane function element or instance does not support local steering of the access traffic multipath communication by the at least one user plane function element or instance but supports steering of the access traffic multipath communication by an external steering function element or instance, (iii) a network configuration or configuration information relating to access traffic multipath communication,
said determining is based on profile information of an external steering function element or instance relating to data network-related information, slice-related information, a communication function element or instance, and/or a group of communication function elements or instances,
the indication comprises one or more of communication information of an external steering function element or instance to be used, and/or one or more of information, such as one or more of application information, slice-related information and data network-related information, indicating that an external steering function element or instance is to be used,
the capability information is provided by the at least one user plane function element or instance, or is fetched or subscribed via a profile of the at least one user plane function element or instance, stored in a repository function element or instance, from the repository function element or instance and/or via a network exposure function element or instance,
the network configuration or configuration information relating to access traffic multipath communication is configured in or by the session management function element or instance or a policy control function element or instance, and/or is based on one or more of capability information of the at least one user plane function element or instance, data network-related information and slice-related information,
the profile information is held by an external steering function element or instance or an associated application function, and/or is fetched from or subscribed to at a repository function element or instance and/or via a network exposure function element or instance,
said discovering and/or selecting comprises identifying an external steering function element or instance,
said identifying is based on communication information of an external steering function element or instance, which is received from the communication function element or instance as or in an indication of preferred or requested usage of an external steering function element or instance,
said identifying is based on application information denoting at least one application being served by an external steering function element or instance, data network-related information of an external steering function element or instance, slice-related information assisting in identifying and/or selecting a network slice, and/or communication function information on a communication function element or instance or a group of communication function elements or instances being served by an external steering function element or instance,
said identifying is based on auxiliary information indicative of an appropriateness of an external steering function element or instance for steering access traffic multipath communication in the at least one user plane session, such as subscription information, preference information indicating a preference of an external steering function element or instance by the communication function element or instance, load balancing information, capability indicating a capability of an external steering function element or instance,
said identifying comprises identifying an external steering function element or instance corresponding to the received communication information,
said identifying comprises querying a repository function element or instance, directly and/or via a network exposure function element or instance, for information on an external steering function element or instance in accordance with the application information, the data network-related information, the slice-related information, an identifier of one or a group of communication function elements or instances, and/or the communication function information, and identifying the external steering function element or instance in the case that information on a single external steering function element or instance is returned in response to the query or identifying one of the external steering function elements or instances based on the auxiliary information in the case that information on a plurality of external steering function elements or instances is returned in response to the query,
said identifying comprises subscribing, at a repository function element or instance and/or via a network exposure function element or instance, to information on an external steering function element or instance in accordance with the application information, the data network-related information, the slice-related information, an identifier of one or a group of communication function elements or instances, and/or the communication function information, and identifying the external steering function element or instance in the case that information on a single external steering function element or instance is notified in response to the subscription or identifying one of the external steering function elements or instances based on the auxiliary information in the case that information on a plurality of external steering function elements or instances is notified in response to the subscription,
said identifying comprises querying for or subscribing to information on one or more available external steering function elements or instances, from or at the external steering function elements or instances or associated application functions, and identifying an external steering function element or instance based on the information being returned in response to the query or notified in response to the subscription,
said initiating comprises determining to use one user plane function element or instance for the different access paths or different user plane function elements or instances are used for the different access paths,
said determining is based on an indication of preferred or requested usage of one or different user plane function elements or instances for the different access paths from the communication function element or instance,
said determining is based on one or more predetermined criteria, indicative of a preferred or requested number of user plane function elements or instances for the different access paths, from the communication function element or instance,
said determining is based on a local configuration for session management and/or policy control and/or capability information of user plane function elements or instances,
in the case that different user plane function elements or instances are used for the different access paths, forwarding action rules are created for and provided to one user plane function element or instance, and forwarding action rules are created for and provided to another user plane function element or instance,
said obtaining comprises choosing and/or fetching one or more of the communication information of the external steering function element or instance,
said obtaining comprises identifying port and/or (IP) address information of a port and/or an address of the external steering function element or instance to be used for the at least one user plane session,
the one or more of the communication information is provided to the communication function element or instance,
the port and/or (IP) address information is provided, as part of the communication information of the external steering function element or instance, to the communication function element or instance and the at least one user plane function element or instance,
said identifying comprises electing a port and/or an (IP) address from a set of available ports and/or (IP) addresses of the external steering function element or instance,
said identifying comprises requesting and acquiring grant of usage of an elected port and/or (IP) address, which is elected from a set of available ports and/or (IP) addresses of the external steering function element or instance, from the external steering function element or instance,
said identifying comprises requesting and acquiring assignment of a port and/or an (IP) address from the external steering function element or instance,
said initiating comprises querying and acquiring policy rules for the at least one user plane session from a policy control function element or instance, wherein the rules are created based on the policy rules for the at least one user plane session,
said obtaining comprises obtaining path-specific (IP) addresses or prefixes for the different access paths from the at least one user plane function element or instance, wherein the path-specific (IP) addresses or prefixes are provided to the communication function element or instance as part of the communication information of the external steering function element or instance and to the external steering function element or instance,
in the case that different user plane function elements or instances are used for the different access paths, a path-specific (IP) address or prefix for one access path is obtained from the user plane function element or instance used for the one access path, and a path-specific (IP) address or prefix for another access path is obtained from the user plane function element or instance used for the another access path,
the method, functionality or operability comprises receiving a request for establishment of the at least one user plane session for access traffic multipath communication from the communication function element or instance,
the method, functionality or operability is performed in or for establishment of the at least one user plane session for access traffic multipath communication.

According to a fourth aspect, there is provided a method of (or, stated differently, operable or for use in/by) a communication function element or instance in a mobile communication system, comprising: requesting establishment of at least one user plane session for access traffic multipath communication across multiple accesses via different access paths between the communication function element or instance and at least one user plane function element or instance, obtaining access traffic multipath communication rules for access traffic multipath communication in the at least one user plane session and communication information of an external steering function element or instance, which is to be used for steering access traffic multipath communication in the at least one user plane session and is located outside of and connected to the at least one user plane function element or instance, from a session management function element or instance, and establishing the at least one user plane session based on the access traffic multipath communication rules and the communication information of the external steering function element or instance.

According to a fifth aspect, there is provided an apparatus of (or, stated differently, operable or for use in/by) a communication function element or instance in a mobile communication system, comprising: means for requesting establishment of at least one user plane session for access traffic multipath communication across multiple accesses via different access paths between the communication function element or instance and at least one user plane function element or instance, means for obtaining access traffic multipath communication rules for access traffic multipath communication in the at least one user plane session and communication information of an external steering function element or instance, which is to be used for steering access traffic multipath communication in the at least one user plane session and is located outside of and connected to the at least one user plane function element or instance, from a session management function element or instance, and means for establishing the at least one user plane session based on the access traffic multipath communication rules and the communication information of the external steering function element or instance.

According to a sixth aspect, there is provided an apparatus of (or, stated differently, operable or for use in/by) a communication function element or instance in a mobile communication system, the apparatus comprising at least one processor and at least one memory including computer program code, wherein the processor, with the at least one memory and the computer program code, is configured to cause the apparatus to perform: requesting establishment of at least one user plane session for access traffic multipath communication across multiple accesses via different access paths between the communication function element or instance and at least one user plane function element or instance, obtaining access traffic multipath communication rules for access traffic multipath communication in the at least one user plane session and communication information of an external steering function element or instance, which is to be used for steering access traffic multipath communication in the at least one user plane session and is located outside of and connected to the at least one user plane function element or instance, from a session management function element or instance, and establishing the at least one user plane session based on the access traffic multipath communication rules and the communication information of the external steering function element or instance.

According to various developments/modifications, any one of the aforementioned fourth to sixth aspects may include one or more of the following:
said requesting comprises providing an indication of preferred or requested usage of an external steering function element or instance for steering access traffic multipath communication in the at least one user plane session to the session management function element or instance,
the indication comprises one or more of communication information of an external steering function element or instance to be used, and/or one or more of information, such as application information, data network-related information or slice-related information, indicating that an external steering function element or instance is to be used,
said obtaining comprises obtaining port and/or (IP) address information of a port and/or an address of the external steering function element or instance to be used for the at least one user plane session,
said obtaining comprises obtaining path-specific (IP) addresses or prefixes for the different access paths,
in the case that a single user plane function element or instance is used for the different access paths, the at least one user plane session is established to the single user plane function element or instance using the path-specific (IP) addresses or prefixes,
in the case that different user plane function elements or instances are used for the different access paths, the at least one user plane session is established to one user plane function element or instance using one path-specific (IP) address or prefix and to another user plane function element or instance using another path-specific (IP) address or prefix,

According to a seventh aspect, there is provided a method of (or, stated differently, operable or for use in/by) a user plane function element or instance in a mobile communication system, comprising: obtaining forwarding action rules for access traffic multipath communication in at least one user plane session from a session management function element or instance, and assisting establishment of the at least one user plane session for access traffic multipath communication across multiple accesses via different access paths between a communication function element or instance and the user plane function element or instance, wherein an external steering function element or instance, located outside of and connected to the user plane function element or instance, is to be used for steering access traffic multipath communication in the at least one user plane session, by terminating at least one of the access paths based on the forwarding action rules.

According to a eighth aspect, there is provided an apparatus of (or, stated differently, operable or for use in/by) a user plane function element or instance in a mobile communication system, comprising: means for obtaining forwarding action rules for access traffic multipath communication in at least one user plane session from a session management function element or instance, and means for assisting establishment of the at least one user plane session for access traffic multipath communication across multiple accesses via different access paths between a communication function element or instance and the user plane function element or instance, wherein an external steering function element or instance, located outside of and connected to the user plane function element or instance, is to be used for steering access traffic multipath communication in the at least one user plane session, by terminating at least one of the access paths based on the forwarding action rules.

According to a ninth aspect, there is provided an apparatus of (or, stated differently, operable or for use in/by) a user plane function element or instance in a mobile communication system, the apparatus comprising at least one processor and at least one memory including computer program code, wherein the processor, with the at least one memory and the computer program code, is configured to cause the apparatus to perform: obtaining forwarding action rules for access traffic multipath communication in at least one user plane session from a session management function element or instance, and assisting establishment of the at least one user plane session for access traffic multipath communication across multiple accesses via different access paths between a communication function element or instance and the user plane function element or instance, wherein an external steering function element or instance, located outside of and connected to the user plane function element or instance, is to be used for steering access traffic multipath communication in the at least one user plane session, by terminating at least one of the access paths based on the forwarding action rules.

According to various developments/modifications, any one of the aforementioned seventh to ninth aspects may include one or more of the following:
the method, functionality or operability comprises obtaining port and/or (IP) address information of a port and/or an address of the external steering function element or instance to be used for the at least one user plane session,
the port and/or (IP) address information is used for forwarding access traffic in the access traffic multipath communication to the external steering function element or instance based on the forwarding action rules,
the method, functionality or operability comprises allocating path-specific (IP) addresses or prefixes for the different access paths, and providing the path-specific (IP) addresses or prefixes to the session management function element or instance,
the method, functionality or operability comprises allocating a path-specific (IP) address or prefix for one of the different access paths, and providing the path-specific (IP) address or prefix to the session management function element or instance,
the method, functionality or operability comprises providing capability information indicating whether the user plane function element or instance supports local steering of the access traffic multipath communication by the user plane function element or instance and/or supports steering of the access traffic multipath communication by an external steering function element or instance.

According to a tenth aspect, there is provided a method of (or, stated differently, operable or for use in/by) a steering function element or instance in a mobile communication system, comprising: obtaining multi access rules for access traffic multipath communication in at least one user plane session from a session management function element or instance, and steering access traffic multipath communication across multiple accesses via different access paths between a communication function element or instance and at least one user plane function element or instance based on the multi access rules, wherein the steering function element or instance is located outside of and connected to the at least one user plane function element or instance.

According to a eleventh aspect, there is provided an apparatus of (or, stated differently, operable or for use in/by) a steering function element or instance in a mobile communication system, comprising: means for obtaining multi access rules for access traffic multipath communication in at least one user plane session from a session management function element or instance, and means for steering access traffic multipath communication across multiple accesses via different access paths between a communication function element or instance and at least one user plane function element or instance based on the multi access rules, wherein the steering function element or instance is located outside of and connected to the at least one user plane function element or instance.

According to a twelfth aspect, there is provided an apparatus of (or, stated differently, operable or for use in/by) a steering function element or instance in a mobile communication system, the apparatus comprising at least one processor and at least one memory including computer program code, wherein the processor, with the at least one memory and the computer program code, is configured to cause the apparatus to perform: obtaining multi access rules for access traffic multipath communication in at least one user plane session from a session management function element or instance, and steering access traffic multipath communication across multiple accesses via different access paths between a communication function element or instance and at least one user plane function element or instance based on the multi access rules, wherein the steering function element or instance is located outside of and connected to the at least one user plane function element or instance.

According to various developments/modifications, any one of the aforementioned tenth to twelfth aspects may include one or more of the following:
the method, functionality or operability comprises assisting identification of port and/or (IP) address information of a port and/or an (IP) address of the steering function element or instance to be used for the at least one user plane session at the session management function element or instance,
said assisting comprises receiving a request for an elected port and/or (IP) address from the session management function element or instance, and providing grant of usage of the elected port and/or (IP) address to the session management function element or instance when the elected port and/or (IP) address is usable for access traffic multipath communication in the at least one user plane session,
said assisting comprises receiving a request for assignment of a port and/or (IP) address from the session management function element or instance, choosing a port and/or (IP) address which is usable for access traffic multipath communication in the at least one user plane session, and providing assignment of the chosen port and/or (IP) address to the session management function element or instance,
the method, functionality or operability comprises obtaining path-specific (IP) addresses or prefixes for the different access paths from the session management function element or instance,
the method, functionality or operability comprises requesting, initiating or causing registration of profile information of the steering function element or instance at a repository function element or instance, directly and/or via a network exposure function element or instance,
the method, functionality or operability comprises holding profile information of the steering function element or instance,
the profile information is registered at the repository function element or instance with direct registration from the steering function element or instance or an associated application function, indirect registration via a network exposure function element or instance, or configuration by operation, administration and maintenance,
the profile information comprises communication information of the steering function element or instance, application information denoting at least one application being served by the steering function element or instance, data network-related information of the steering function element or instance, slice-related information assisting in identifying and/or selecting a network slice, and/or communication function information on a communication function element or instance or a group of communication function elements or instances being served by the steering function element or instance.

According to further various developments/modifications, in/for any one of the aforementioned first to twelfth aspects, one or more of the following may apply:
the steering access traffic multipath communication comprises an access traffic steering, switching and splitting communication,
the multiple accesses comprise an access in compliance with standardization of the mobile communication system and an access in non-compliance with standardization of the mobile communication system, and/or
the at least one user plane session comprises a multi access packet data unit session comprising the different access paths terminating at one user plane function element or instance,
the at least one user plane session comprises a multi access packet data unit session comprising the different access paths terminating at different user plane function elements or instances,
the at least one user plane session comprises different packet data unit sessions, each comprising one of the different access paths terminating at one user plane function element or instance,
the (external) steering function element or instance is configured as a proxy for the access traffic multipath communication, such as a multipath transmission control protocol proxy when the access traffic multipath communication is handled or accomplished by a multipath transmission control protocol,
the (external) steering function element or instance is associated with, collocated with and/or configured by an application function,
the communication function element or instance is or comprises a user equipment element or instance, a residential gateway element or instance, or the like,
the communication information of the external steering function element or instance comprise one or more of a fully-qualified domain name, an address, such as an IP address, and a port or port number of the external steering function element or instance.

According to a thirteenth aspect, there is provided a computer program product comprising (computer-executable) computer program code which, when the program code is executed (or run) on a computer or the program is run on a computer (e.g. a computer of an apparatus according to any one of the aforementioned apparatus-related aspects), is configured to cause the computer to carry out the method according to a corresponding one of the aforementioned method-related aspects.

The computer program product may comprise or may be embodied as a (tangible/non-transitory) computer-readable (storage) medium or the like, on which the computer-executable computer program code is stored, and/or the program is directly loadable into an internal memory of the computer or a processor thereof.

Further developments and/or modifications of the aforementioned example embodiments are set forth in the following.

By way of at least one example embodiment, external steering of access traffic multipath communication in a mobile communication system (e.g. an external access traffic multipath communication steering function) is enabled/realized.

### Brief Description of the Drawings

In the following, example embodiments will be described in greater detail by way of non-limiting examples with reference to the accompanying drawings, in which
Figure 1 shows a schematic diagram illustrating an example of an architecture for access traffic multipath communication using an internal steering function according to at least one example embodiment,
Figure 2 shows a schematic diagram illustrating an example of an architecture for access traffic multipath communication using an external steering function according to at least one example embodiment,
Figure 3 shows a schematic diagram illustrating an example of an architecture for access traffic multipath communication using an external steering function according to at least one example embodiment,
Figure 4 shows a schematic diagram illustrating an example of an architecture for access traffic multipath communication using an external steering function according to at least one example embodiment,
Figure 5 shows a flowchart illustrating an example of a method or process, e.g. operable at/by a session management function element or instance, according to at least one example embodiment,
Figure 6 shows a flowchart illustrating an example of a method or process, e.g. operable at/by a communication function element or instance, according to at least one example embodiment,
Figure 7 shows a flowchart illustrating an example of a method or process, e.g. operable at/by a user plane function element or instance, according to at least one example embodiment,
Figure 8 shows a flowchart illustrating an example of a method or process, e.g. operable at/by a steering function element or instance, according to at least one example embodiment,
Figure 9 shows a sequence diagram illustrating an example of a procedure, e.g. applicable in/for the architecture of Figure 2, according to at least one example embodiment,
Figure 10 shows a sequence diagram illustrating an example of a procedure, e.g. applicable in/for the architecture of Figure 3, according to at least one example embodiment,
Figure 11 shows sequence diagrams (Figures 11(A) and 11(B)) illustrating examples of procedures of proxy/address port identification according to at least one example embodiment,
Figure 12 shows a sequence diagram illustrating an example of procedures of proxy registration and discovery/selection, e.g. applicable for an untrusted proxy, according to at least one example embodiment,
Figure 13 shows a sequence diagram illustrating an example of procedures of proxy registration and discovery/selection, e.g. applicable for a trusted proxy, according to at least one example embodiment,
Figure 14 shows a schematic diagram illustrating an example of a structure of apparatuses according to at least one example embodiment, and
Figure 15 shows a schematic diagram illustrating an example of a structure of apparatuses according to at least one example embodiment.

### Detailed Description

In the following, description will be made to example embodiments. A person skilled in the art will appreciate that the detailed description is by no means to be understood as limiting.

It is to be noted that the following description refers to specifications being used as non-limiting examples for certain network configurations and technologies, system deployments and architectures. Namely, the following description refers to 3GPP standards, being used as non-limiting examples. As such, the description of example embodiments given herein specifically refers to terminology which is directly related thereto. Such terminology is only used in the context of the example embodiments, and is not intended to be limiting in any way. Rather, any other system configurations or deployments may be utilized.

Various example embodiments may, for example, be applicable in any (mobile/wireless) communication system, wherein as 5G systems and next generation systems beyond 5G constitute examples of such applicable systems. In this regard, it is noted that
- when reference is made to a session management function element or instance, this shall be meant as and encompass any (physical, structural or virtual) device, entity, element, instance or function having a corresponding or similar (session management) property/functionality, including a SMF according to 3GPP (5G or beyond) standardization as an illustrative but non-limiting example,
- when reference is made to a user plane function element or instance, this shall be meant as and encompass any (physical, structural or virtual) device, entity, element, instance or function having a corresponding or similar (user plane) property/functionality, including a UPF according to 3GPP (5G or beyond) standardization as an illustrative but non-limiting example,
- when reference is made to a (external) steering function element or instance, this shall be meant as and encompass any (physical, structural or virtual) device, entity, element, instance or function having a corresponding or similar (steering) property/functionality, including a MPTCP proxy according to 3GPP (5G or beyond) standardization as an illustrative but non-limiting example,
- when reference is made to a communication function element or instance, this shall be meant as and encompass any (physical, structural or virtual) device, entity, element, instance or function having a corresponding or similar (communication) property/functionality, including a UE, a residential gateway, etc. according to 3GPP (5G or beyond) standardization as an illustrative but non-limiting example,
- when reference is made to a repository function element or instance, this shall be meant as and encompass any (physical, structural or virtual) device, entity, element, instance or function having a corresponding or similar (repository, holding or database) property/functionality, including a UDR, a NRF, etc. according to 3GPP (5G or beyond) standardization as an illustrative but non-limiting example, and
- when reference is made to a network exposure function element or instance, this shall be meant as and encompass any (physical, structural or virtual) device, entity, element, instance or function having a corresponding or similar (exposure) property/functionality, including a NEF, etc. according to 3GPP (5G or beyond) standardization as an illustrative but non-limiting example.

Hereinafter, various example embodiments and aspects are described using several variants and/or alternatives. It is generally to be noted that, according to certain constraints, all of the described variants and/or alternatives may be provided alone or in any combination (also including combinations of individual features of the various variants and/or alternatives). In this description, the terms "comprising" and "including" should be understood as not limiting the described example embodiments and implementations to include only those features that have been mentioned, where such example embodiments and implementations may also contain features, structures, units, modules etc. that have not been specifically described herein.

In the drawings, it is to be noted that lines/arrows interconnecting individual blocks or entities are generally meant to illustrate an operational coupling there-between, which may be a physical and/or logical coupling, which on the one hand is implementation-independent (e.g. wired or wireless) and on the other hand may also comprise an arbitrary number of intermediary functional blocks or entities not shown. In flowcharts or sequence diagrams, the illustrated order of operations or actions is generally illustrative, and any other order of respective operations or actions may be applied, where feasible.

According to various example embodiments, there are provided measures/mechanisms for enabling/realizing external steering of access traffic multipath communication in a mobile communication system (e.g. an external access traffic multipath communication steering function).

In the following description, terms like "steering function" and "proxy" are used interchangeably and are means to have an equivalent or corresponding meaning, and the term "steering" may be understood as a short form of "steering and/or switching and/or splitting" so as to encompass relevant functionalities in terms of access traffic multipath communication across multiple accesses via different access paths depending on the realization/implementation thereof.

At least one example embodiment relates to access traffic multipath communication in a mobile communication system, e.g. a 3GPP-standardized wireless communication system, such as a 5G system. In this regard, access traffic multipath communication shall refer to any kind of communication, e.g. transmission, of traffic such as user plane data in/over a (radio) access domain of a mobile communication system, which passes across multiple accesses, e.g. different types of access technologies, networks or the like, via different access paths or legs between a communication function element or instance, such as UE, and a user plane function element or instance, such as UPF.

As one example of such access traffic multipath communication, Access Traffic Steering, Switching and Splitting (ATSSS) is standardized in 3GPP. It allows traffic steering across multiple accesses (e.g. one 3GPP access and one non-3GPP access) on a service data flow level, e.g. at finer granularity than a PDU session. In ATSSS, the notion of Multi Access (MA) PDU sessions is introduced, e.g. PDU sessions for which data traffic can be served over one or more (e.g. two) concurrent accesses.

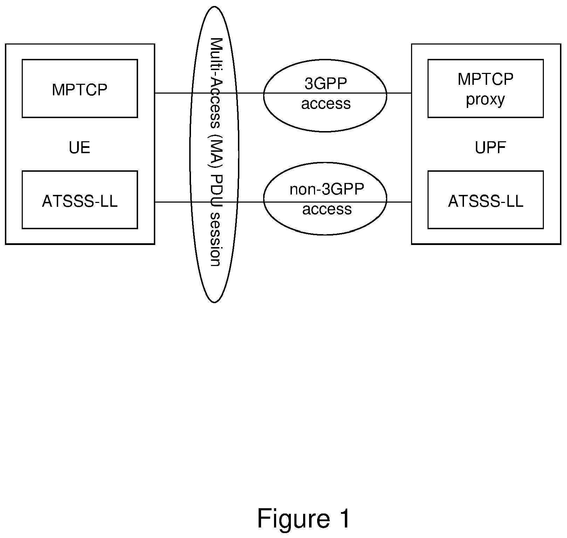

Figure 1 shows a schematic diagram illustrating an example of an architecture for access traffic multipath communication using an internal steering function according to at least one example embodiment. In some example embodiments, Figure 1 may reflect the architecture reference model for ATSSS support according to section 4.2.10 of 3GPP TS 23.501 V16.11.0 (2021-12).

As shown in Figure 1, the UE comprises a MPTCP functionality and an ATSSS-LL functionality (while its Performance Measurement Functionality (PMF) is not shown), and the UPF comprises a MPTCP proxy functionality and an ATSSS-LL functionality (while its Performance Measurement Functionality (PMF) is not shown). Between the UE and the UPF, there is a MA PDU session for the access traffic multipath communication (ATSSS) across 3GPP and non-3GPP accesses via different access paths/legs.

The MPTCP and ATSSS-LL functionalities represent the steering functions which perform the actual traffic steering in both UE and UPF. Based on PCC Rules, a SMF creates ATSSS Rules and Multi Access (MA) Rules (MAR). The ATSSS Rules are sent to the UE, and the MA Rules are sent to the UPF via the N4 interface. The ATSSS Rules include traffic descriptors and information about steering modes and steering functions to be applied by the UE. The MA Rules include information for the UPF to perform traffic steering, like applicable steering modes and steering functions and forwarding action information for each of the two accesses. RTT measurements and reporting of access (un)availability can be performed by the Performance Measurement Functionality (PMF) in the UE and/or the UPF or by using the corresponding function provided by MPTCP.

Accordingly, on the network side, the actual traffic steering is performed by the MPTCP and ATSSS-LL functionalities located in the UPF, where hereinafter the MPTCP proxy is regarded as the relevant steering function for user plane data being handled by the TCP as user plane protocol.

Using an internal steering function, e.g. the MPTCP proxy in the UPF, however, has certain problems and drawbacks. Such problems and drawbacks can result from the fact that the steering function (e.g. the ATSSS proxy functionality) is coupled with the UPF functionality.

Using an external steering function, e.g. the MPTCP proxy outside the UPF (behind the N6 interface), would be beneficial in that the ATSSS proxy functionality would thus be decoupled from the UPF functionality. Thereby, the proxy could run centrally in the core network or a cloud, either controlled by the operator or a third party, and the UPF in the network and the proxy could be upgraded independently of each other, e.g. there is no need to upgrade all UPFs if a new version of a proxy or a new type of steering function is introduced. An external steering function would also be beneficial in terms of public safety, e.g., for military deployments, as a military department can leverage not only the commercial operator network but also deploy their own user plane entities including the steering function for secure traffic isolation.

However, various issues may arise when the ATSSS proxy functionality is located outside of and connected to the UPF functionality, which present challenges for facilitating proper realization of such architecture and corresponding operation.

Therefore, improved measures/mechanisms for (enabling/realizing) external steering of access traffic multipath communication in a mobile communication system (e.g. an external access traffic multipath communication steering function) are desired.

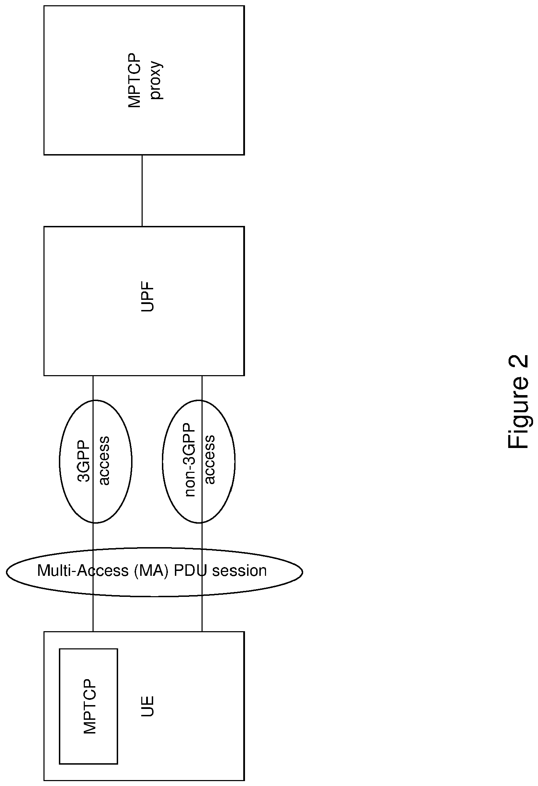

With reference to Figures 2 to 4, various example embodiments of architectures are described, which are applicable for access traffic multipath communication using an external steering function according to example embodiments. It is to be noted that these architectures are illustrated in view of and on the basis of the standardized architecture reference model for ATSSS support, as illustrated in Figure 1, thus reflecting the differences therebetween. Accordingly, the illustrated entities and functionalities are examples, e.g. any one or more of MPTCP, MPQUIC, QUIC, MASQUE and/or FRER could be used as user plane protocol for access traffic multipath communication such that the related steering function could not only be realized by a MPTCP proxy as illustrated but also as MPTCP, MPQUIC, QUIC, MASQUE or FRER proxy.

Figure 2 shows a schematic diagram illustrating an example of an architecture for access traffic multipath communication using an external steering function according to at least one example embodiment.

As shown in Figure 2, the UE comprises a MPTCP functionality (while other functionalities are omitted for the sake of lucidity). A MA PDU session for the access traffic multipath communication (e.g. ATSSS) across 3GPP and non-3GPP accesses via different access paths/legs is established between the UE and one UPF, e.g. the MA PDU session terminates at the UPF (both access paths/legs terminating at and thus being served by the same UPF). A MPTCP proxy representing a (e.g. ATSSS) steering function is located outside of the UPF, e.g. connected to the UPF, e.g. via N6 interface. In this architecture, the MPTCP proxy uses one link, e.g. one N6 link, towards the UPF for DL traffic.

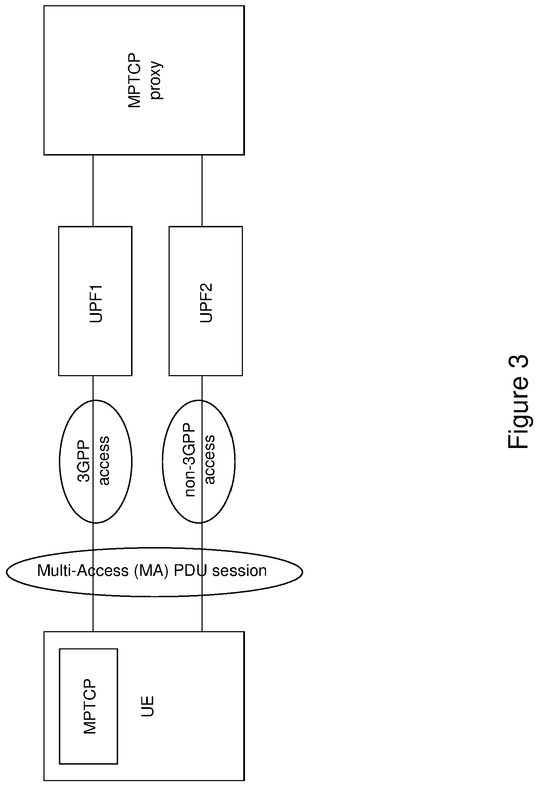

Figure 3 shows a schematic diagram illustrating an example of an architecture for access traffic multipath communication using an external steering function according to at least one example embodiment.

As shown in Figure 3, the UE comprises a MPTCP functionality (while other functionalities are omitted for the sake of lucidity). A MA PDU session for the access traffic multipath communication (e.g. ATSSS) across 3GPP and non-3GPP accesses via different access paths/legs is established between the UE and two UPFs, e.g. the MA PDU session terminates at two UPFs (each access path/leg terminating at and thus being served by one respective UPF). A MPTCP proxy representing a (e.g. ATSSS) steering function is located outside of the UPFs, e.g. connected to the UPFs, e.g. via N6 interfaces. In this architecture, the MPTCP proxy uses two links, e.g. two N6 links, towards the UPF for DL traffic.

It is to be noted that a corresponding architecture with more than two UPFs (e.g. for more than two different access and/or access paths/legs) is also applicable.

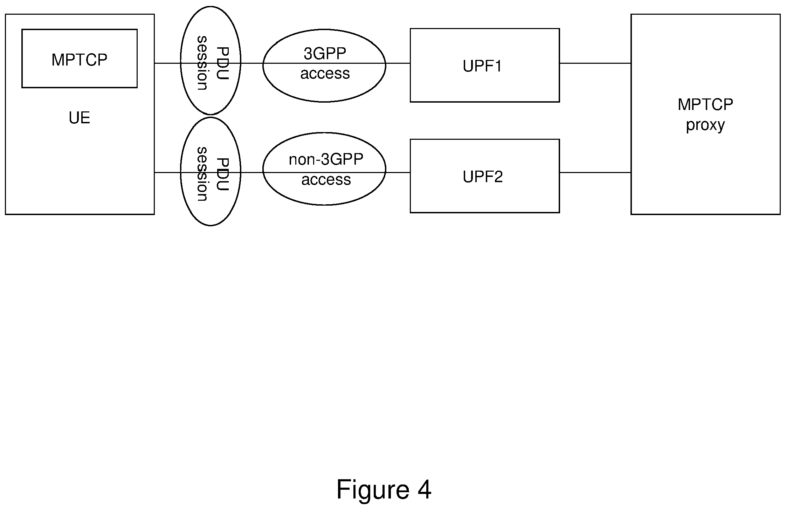

Figure 4 shows a schematic diagram illustrating an example of an architecture for access traffic multipath communication using an external steering function according to at least one example embodiment.

As shown in Figure 4, the UE comprises a MPTCP functionality (while other functionalities are omitted for the sake of lucidity). Two PDU sessions for the access traffic multipath communication across 3GPP and non-3GPP accesses via different access paths/legs is established between the UE and two UPFs, e.g. each of the two PDU sessions terminates at one respective UPF (each access path/leg terminating at and thus being served by one respective UPF). A MPTCP proxy representing a steering function is located outside of the UPFs, e.g. connected to the UPFs, e.g. via N6 interfaces. In this architecture, the MPTCP proxy one link, e.g. one N6 link, towards UPF1 for DL traffic.

It is to be noted that a corresponding architecture with more than two UPFs (e.g. for more than two different access and/or access paths/legs) and/or more than two PDU sessions is also applicable.

According to example embodiments, it can be decided/configured which architecture is to be applied. Namely, the SMF can decide the applicable architecture, thus properly configuring for the further procedure.

On one hand, the applicable architecture may be decided based on a local configuration in the SMF or the PCF or via PCC Rules. In this regard, UPF selection criteria, e.g. capabilities of UPF/UPFs to support at least one of the architectures, may be considered.

On the other hand, the applicable architecture may be decided based on an indication of/from the UE requesting session establishment. Namely, the UE may influence UPF selection, e.g. whether one or two UPFs are to be involved, e.g. by providing selection criteria, like low/high reliability requirement while requesting session establishment.

If not stated otherwise, all of the subsequent descriptions are applicable to any one of the example embodiment architectures of Figures 2 to 4.

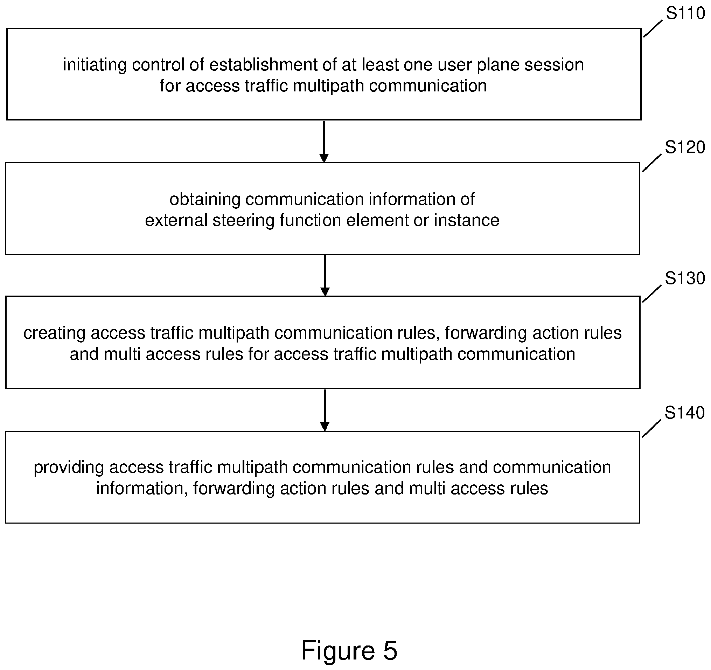

Figure 5 shows a flowchart illustrating an example of a method or process according to at least one example embodiment. The method or process of Figure 5 is a method or process of (or, stated differently, operable or for use in/by) a session management function element or instance or an element, function or entity of similar/comparable functionality or operability, in a mobile communication system, such as a SMF in a 3GPP network or system.

As shown in Figure 5, the method or process comprises an operation (S110) of initiating control of establishment of at least one user plane session, such as a MA PDU session or plural PDU sessions, for access traffic multipath communication across multiple accesses via different access paths between a communication function element or instance and at least one user plane function element or instance, an operation (S120) of obtaining communication information of an external steering function element or instance to be used for steering access traffic multipath communication in the at least one user plane session, said external steering function element or instance located outside of and connected to the at least one user plane function element or instance, an operation (S130) of creating access traffic multipath communication rules, forwarding action rules and multi access rules for access traffic multipath communication in the at least one user plane session, and an operation (S140) of providing the access traffic multipath communication rules and the communication information of the external steering function element or instance to the communication function element or instance, the forwarding action rules to the at least one user plane function element or instance, and the multi access rules to the steering function element or instance.

Despite the example embodiment illustration in Figure 5, it is to be noted that the aforementioned operations do not need to be performed in this order. For example, the creating operation can be performed (at least) partly concurrently with or parallel to or even before the obtaining operation.

As is evident from the above, the session management function element or instance controls establishment of at least one user plane session for access traffic multipath communication across multiple accesses via different access paths between a communication function element or instance and at least one user plane function element or instance, said access traffic multipath communication being subject to steering by a steering function element or instance external to the user plane function element or instance.

In this regard, e.g. in the context/course of initiating the session establishment control, the session management function element or instance may (i) determine to use an external steering function element or instance for steering access traffic multipath communication in the at least one user plane session, and/or (ii) discover and/or select an external steering function element or instance for steering access traffic multipath communication in the at least one user plane session.

In the following, various details and/or examples for determining to use an external steering function element or instance for steering access traffic multipath communication in the at least one user plane session are described. Namely, it is described how the session management function element or instance (referred to as SMF) can determine (or decide) that an external steering function element or instance (referred to as proxy) is to be used, and thus trigger usage of an external steering function element or instance (referred to as proxy), for steering access traffic multipath communication in the at least one user plane session (which, by way of example, is illustrated as a MA PDU session or a number of e.g. two PDU sessions in view of the example embodiment architectures of Figures 2 to 4).

Such determination, decision or triggering may be based on one or more of the following options:
(i) an indication of preferred or requested usage of an external steering function element or instance from the communication function element or instance,
(ii) capability information of the at least one user plane function element or instance, indicating that the at least one user plane function element or instance does not support local steering of the access traffic multipath communication by the at least one user plane function element or instance but supports steering of the access traffic multipath communication by an external steering function element or instance,
(iii) a network configuration or configuration information relating to access traffic multipath communication, and
(iv) profile information of an external steering function element or instance relating to data network-related information, slice-related information, a communication function element or instance, and/or a group of communication function elements or instances.

As an example of option (i), the UE may indicate its preference to use an external proxy explicitly, e.g. by providing the proxy address or an indicator, or implicitly, e.g. by providing information used by the network, e.g. the SMF, for the determination.

In this regard, the SMF may use an indication or thus included/provided information from the UE. On the one hand, the UE may indicate its preference to use an external proxy by providing e.g. any one or more of the FQDN, the IP address and the port or port number of the external proxy to be used, or an indicator of the preferred external proxy to be used, or the like. Based thereon, the SMF can directly opt for the thus specified external proxy, e.g. trigger the network to use an external proxy. On the other hand, the UE may indicate its preference to use an external proxy by providing e.g. one or more of a list of targeted applications, DNN/S-NSSAI or other relevant information, or the like. Based thereon, the SMF can indirectly opt for the thus specified external proxy, e.g. trigger the network to use an external proxy. Namely, the SMF may, referring to corresponding information, derive that the thus specified information, such as targeted application/s, implies usage of an external proxy.

As an example of option (ii), an external proxy may be required when the UPF/s does/do not support the respective (e.g. ATSSS) steering function but supports/support the external steering function.

In this regard, the SMF may use corresponding capability information. Namely, the SMF may derive that an external proxy is to be used when a UPF does not support the respective (e.g. ATSSS) steering function (e.g. the UPF does not support MPTCP proxy but this proxy is required by PCC rules) and exhibits support for the external steering function. Such capability information may be presented from the UPF e.g. via N4 interface to the SMF or via its NRF and/or UDR profile which may be fetched and/or subscribed to by the SMF (either directly from the NRF and/or the UDR or via the NEF).

As an example of option (iii), the network, e.g. the SMF, may decide to use an external proxy based on a network configuration or other information.

In this regard, the SMF may use corresponding information such as a network configuration, e.g. the in SMF and/or the PCF, to derive that an external proxy is to be used. Such network configuration may be based on UPF capabilities, DNN/S-NSSAI, or other information.

As an example of option (iv), the proxy or an associated AF may create and store external proxy data, e.g. for a certain DNN/S-NSSAI, UE ID or group of UE(s) in the network (e.g. UDR and/or NRF) where it can be fetched or subscribed to by the SMF and/or the PCF (either directly from the NRF and/or the UDR or via the NEF).

In this regard, the SMF may use corresponding data, such as profile information, to derive that an external proxy is to be used. Such data or profile information may be created/sored for a certain DNN/S-NSSAI, UE ID or group of UE(s) or the like. Then, the SMF may derive, based on information of e.g. DNN/S-NSSAI, UE ID or group of UE(s) for the access traffic multipath communication and/or the session/s, that the external proxy corresponding or complying thereto is to be used.

In the following, various details and/or examples discovering and/or selecting an external steering function element or instance for steering access traffic multipath communication in the at least one user plane session are described. Namely, it is described how the session management function element or instance (referred to as SMF) can select and appropriate external steering function element or instance (referred to as proxy) for steering access traffic multipath communication in the at least one user plane session (which, by way of example, is illustrated as a MA PDU session or a number of e.g. two PDU sessions in view of the example embodiment architectures of Figures 2 to 4).

Such discovery and/or selection comprise identifying an external steering function element or instance is to be used, which may comprise one or more of the following options:
(i) identifying an external steering function element or instance corresponding to received communication information,
(ii) querying a repository function element or instance, directly and/or via a network exposure function element or instance, for information on an external steering function element or instance in accordance with application information, data network-related information, slice-related information, an identifier of one or a group of communication function elements or instances, and/or communication function information, and identifying the external steering function element or instance in the case that information on a single external steering function element or instance is returned in response to the query or identifying one of the external steering function elements or instances based on the auxiliary information in the case that information on a plurality of external steering function elements or instances is returned in response to the query,
(iii) subscribing, at a repository function element or instance and/or via a network exposure function element or instance, to information on an external steering function element or instance in accordance with application information, data network-related information, slice-related information, an identifier of one or a group of communication function elements or instances, and/or communication function information, and identifying the external steering function element or instance in the case that information on a single external steering function element or instance is informed in response to the subscription or identifying one of the external steering function elements or instances based on the auxiliary information in the case that information on a plurality of external steering function elements or instances is informed in response to the subscription,
(iv) querying for or subscribing to information on one or more available external steering function elements or instances, from or at the external steering function elements or instances or associated application functions, and identifying an external steering function element or instance based on the information being returned in response to the query or informed in response to the subscription.

As an example of option (i), the UE may provide proxy information, and the SMF may use the thus provided proxy information.

In this regard, the external proxy specified by the UE (as described above in connection with external proxy usage determination) can be directly used for identification. Namely, the SMF may directly use and access the UE-indicated proxy if e.g. any one or more of FQDN, IP address, port or port number, etc. of the proxy is provided by the UE in the session establishment procedure.

As an example of option (ii), the SMF may fetch proxy information from the UDR and/or NRF, which may be provided e.g. by the proxy via the NEF.

In this regard, if the UE does not provide any proxy information in the session establishment procedure, the SMF may discover the external proxy to be used via a query of the UDR and/or the NRF (or one or more other network functions) assuming that proxy information is stored in the UDR and/or the NRF. Storage of proxy information in the UDR and/or the NRF may be accomplished e.g. via OAM, by the proxy itself or by an associated AF. For example, the proxy or an associated AF may store proxy information in the NRF, or may use the NEF to provide relevant proxy information and the NEF either stores the proxy information in the UDR or registers the proxy in the NRF using NF registration service operation. Relevant proxy information can include e.g. one or more of proxy FQDN, IP address, port or port number, a list of supported applications, DNN/S-NSSAI, UE Group ID indicating the group of all UEs that are served by this proxy (wherein UE Group ID is also stored as part of the subscription data of the individual UEs). If the proxy supports a certain DNN/S-NSSAI or AppID, this information may be registered as part of the proxy NRF/UDR profile, e.g. via OAM, by the proxy or an associated AF, and may be used by the SMF to discover and/or select a proxy via the NRF when a session is established to the specific DNN/S-NSSAI or for the specific App.

As an example of option (iii), the SMF may subscribe to proxy information at the UDR and/or the NRF, e.g. via the NEF.

In this regard, the SMF may subscribe to proxy information at the NRF and/or the UDR via the NEF, and the NEF and/or the UDR may inform the SMF once subscribed proxy information, such as e.g. proxy information for a certain DNN/S-NSSAI, App ID, UE Group ID, etc., is available in the UDR. If multiple NRFS and/or UDRs are deployed in the network, the proxy may be mapped to a group of UEs e.g. with a UE Group ID and/or DNN and/or S-NSSAI, e.g. information that can be used to discover and/or select the same NRF and/or UDR by both the NEF that is storing the proxy information provided by the proxy itself or an associated AF and the SMF discovering/selecting the proxy for a given session.

As an example of option (iv), the SMF may subscribe to or fetch proxy information directly at the external proxy or the associated AF.

In this regard, the SMF (or another NF) may subscribe to or fetch information of/from the external proxy or an associated AF such as e.g. FQDN, IP address, port or port number, proxy type and version, supported applications, DNN/NSSAI, availability, load, or any other information either directly at the proxy or the associated AF or via the NEF. This assumes that the SMF (or another NF) know addresses of proxies/AFs that are potentially accessible (e.g. via configuration).

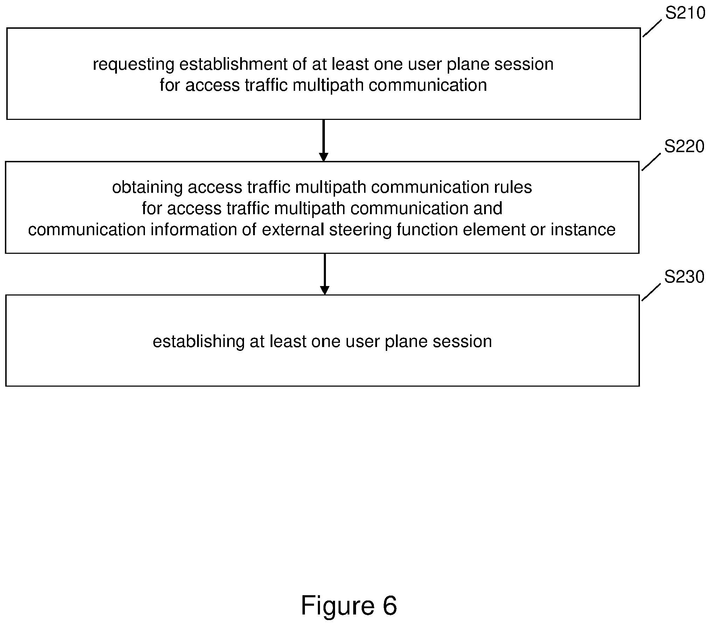

Figure 6 shows a flowchart illustrating an example of a method or process according to at least one example embodiment. The method or process of Figure 6 is a method or process of (or, stated differently, operable or for use in/by) a communication function element or instance or an element, function or entity of similar/comparable functionality or operability, in a mobile communication system, such as a UE in a 3GPP network or system.

As shown in Figure 6, the method or process comprises an operation (S210) of requesting establishment of at least one user plane session, such as a MA PDU session or plural PDU sessions, for access traffic multipath communication across multiple accesses via different access paths between the communication function element or instance and at least one user plane function element or instance, an operation (S220) of obtaining access traffic multipath communication rules for access traffic multipath communication in the at least one user plane session and communication information of an external steering function element or instance, which is to be used for steering access traffic multipath communication in the at least one user plane session and is located outside of and connected to the at least one user plane function element or instance, from a session management function element or instance, and an operation (S230) of establishing the at least one user plane session based on the access traffic multipath communication rules and the communication information of the external steering function element or instance.

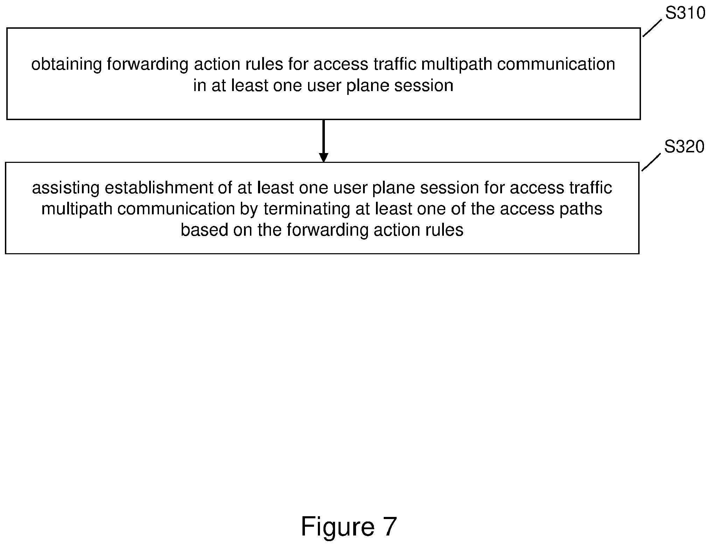

Figure 7 shows a flowchart illustrating an example of a method or process according to at least one example embodiment. The method or process of Figure 7 is a method or process of (or, stated differently, operable or for use in/by) a user plane function element or instance or an element, function or entity of similar/comparable functionality or operability, in a mobile communication system, such as a UPF in a 3GPP network or system.

As shown in Figure 7, the method or process comprises an operation (S310) of obtaining forwarding action rules for access traffic multipath communication in at least one user plane session, such as a MA PDU session or plural PDU sessions, from a session management function element or instance, and an operation (S320) of assisting establishment of the at least one user plane session for access traffic multipath communication across multiple accesses via different access paths between a communication function element or instance and the user plane function element or instance, wherein an external steering function element or instance, located outside of and connected to the user plane function element or instance, is to be used for steering access traffic multipath communication in the at least one user plane session, by terminating at least one of the access paths based on the forwarding action rules.

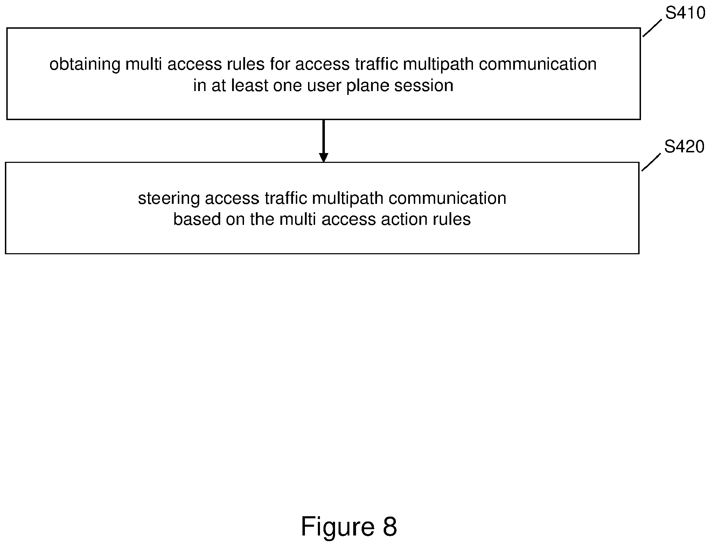

Figure 8 shows a flowchart illustrating an example of a method or process according to at least one example embodiment. The method or process of Figure 8 is a method or process of (or, stated differently, operable or for use in/by) a steering function element or instance or an element, function or entity of similar/comparable functionality or operability, in a mobile communication system, such as a (MPTCP) proxy in a 3GPP network or system.

As shown in Figure 8, the method or process comprises an operation (S410) of obtaining multi access rules for access traffic multipath communication in at least one user plane session, such as a MA PDU session or plural PDU sessions, from a session management function element or instance, and an operation (S420) of steering access traffic multipath communication (in the at least one user plane session for access traffic multipath communication) across multiple accesses via different access paths between a communication function element or instance and at least one user plane function element or instance based on the multi access rules, wherein the steering function element or instance is located outside of and connected to the at least one user plane function element or instance.

For example, the traffic may be steered to one of the one or more user plane sessions and/or one of the different access paths between the at least one user plane function element or instance and the communication function element or instance in the DL direction.

Herein, the term "communication information" may refer to e.g. FQDN, IP address, port or port number or the like, the term "data network-related information" may refer to e.g. DNN or the like, the term "slice-related information" may refer to e.g. S-NASSAI or the like, the term "application information" may refer to e.g. AppID or the like, and the term "proxy information" may refer to e.g. any kind of information relating to a proxy such as one or more of (its and/or related) communication information, application information, slice-related information and/or data network-related information.

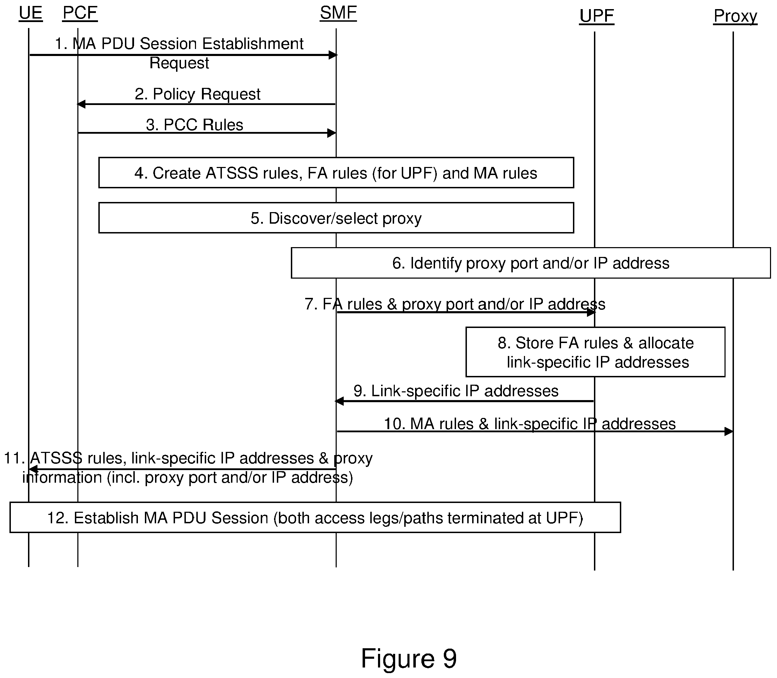

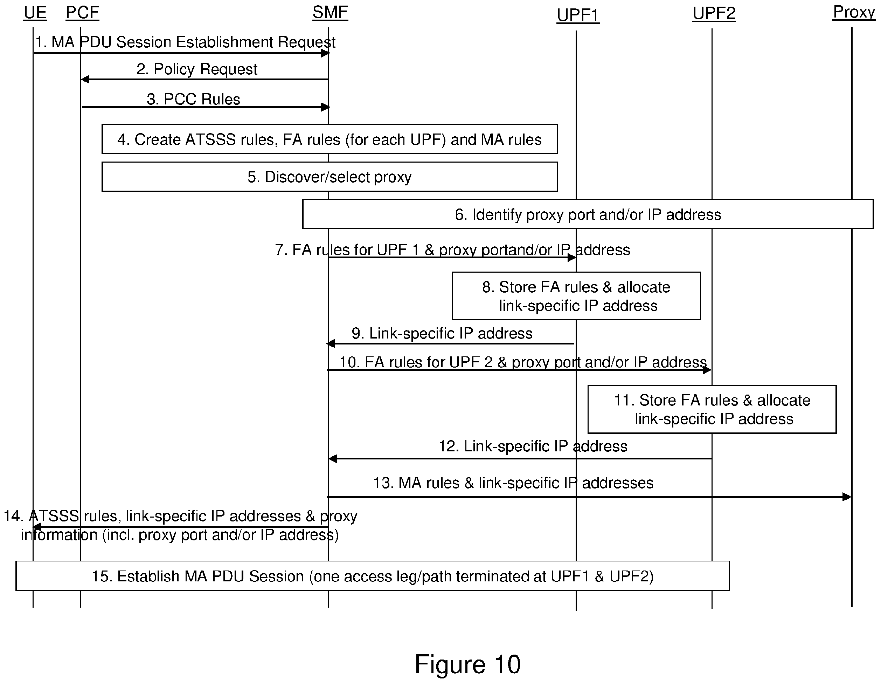

In the following, various examples and specifics of a session establishment phase for different applicable architectures are described with reference to Figures 9 and 10.

Figure 9 shows a sequence diagram illustrating an example of a procedure according to at least one example embodiment. The illustrated session establishment phase procedure assumes ATSSS in the architecture of Figure 2 as a basis, e.g. establishment of a MA PDU session with the proxy, e.g. a MPTCP proxy, as an external steering function with one UPF as termination point of the MA PDU session or the different access paths/legs.

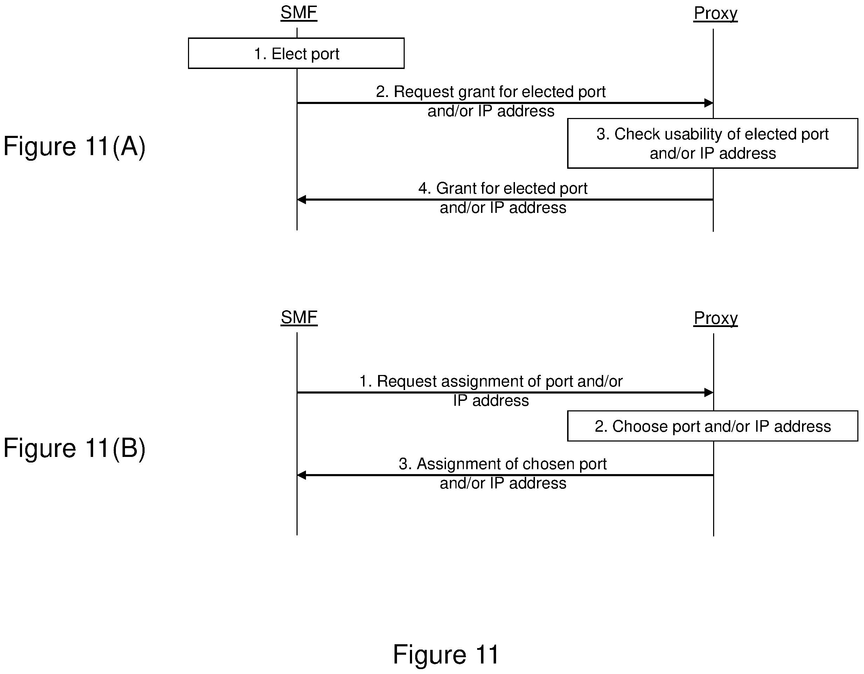

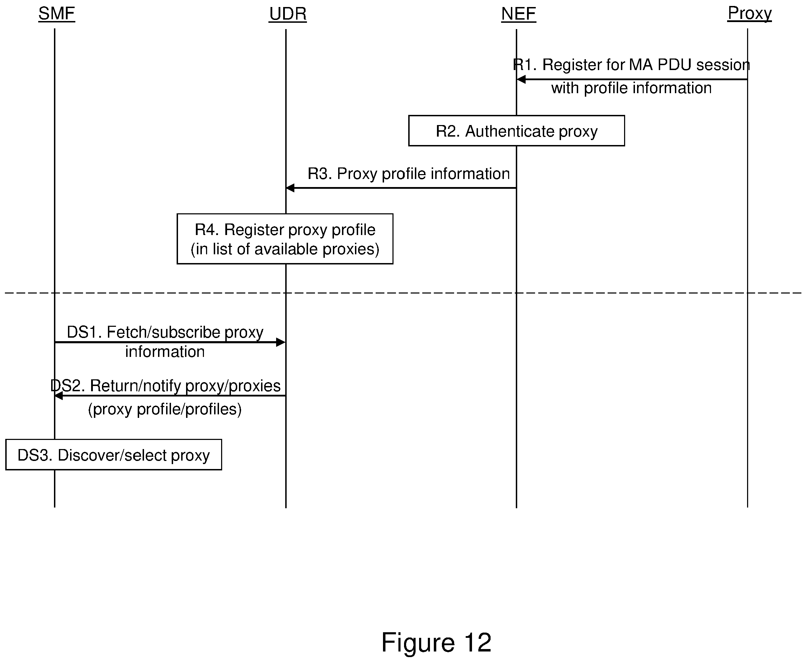

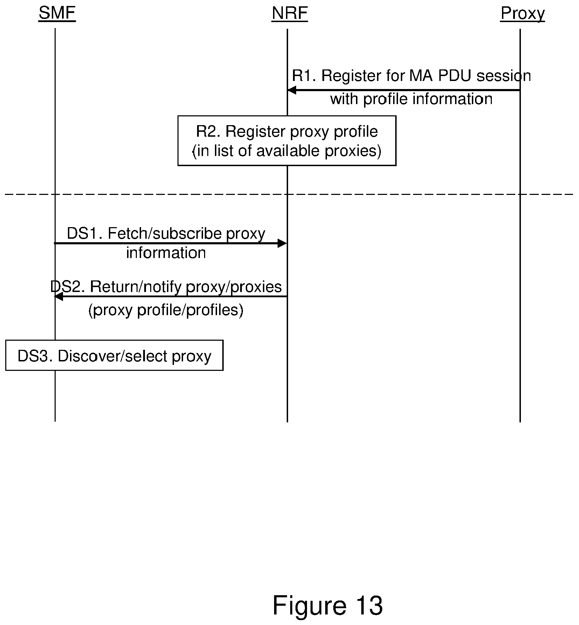

When the SMF receives a MA PDU Session Establishment Request (step 1), it initiates control of MA PDU session establishment. In this regard, the SMF may detect that one UPF is to be used, which may be accomplished by way of an indication from the UE (e.g. in the MA PDU Session Establishment Request) that usage of one UPF is preferred or by using certain criteria applicable in this regard, like some of the aforementioned criteria. Also, the SMF may determine the appropriateness of usage of an external proxy as the external steering function, as described above. For creating the steering rules (e.g. the rules for the external steering function), the SMF may query the PCF for a policy to be used in this regard (step 2). When the PCF sends the policy, e.g. PCC rules, to the SMF (step 3), the SMF may create the steering rules based on the PCC rules. Here, the SMF creates, as the steering rules, ATSSS Rules for the UE, FA Rules for the UPF and MA Rules for the proxy (step 4). The SMF performs discovery and selection of the applicable proxy (step 5), which may be accomplished as described below with reference to Figure 12 or 13, and the SMF identifies a port and/or IP address of the applicable (and discovered/selected) proxy, which may be accomplished as described below with reference to Figure 11 (step 6). Then, the SMF sends the FA Rules and the allocated/usable proxy port and/or IP address to the UPF (step 7). The UPF stores the received information for the MA PDU Session and allocates two link-specific IP addresses or prefixes, one for the 3GPP access path/leg and one for the non-3GPP access path/leg, e.g. two IP addresses or prefixes for usage (by the UE and the proxy) in the context of (performing or steering) the ATSSS multipath communication (step 8), and provides the two link-specific IP addresses or prefixes to SMF (step 9). The SMF also sends the MA Rules and the two link-specific IP addresses or prefixes (which are allocated by the UPF) to the proxy (step 10). Thereby, the proxy may encapsulate DL packets that are meant for the two different access paths/legs before sending them to the UPF, while encapsulation may happen in different ways, e.g. by using layer 2 or layer 3 tunnels, and the proxy may also directly send packets to the allocated IP addresses. Further, the SMF sends the ATSSS Rules and the two link-specific IP addresses or prefixes (which are allocated by the UPF) as well as proxy information to the UE (step 11). The thus provided proxy information comprise the allocated/usable proxy port and/or IP address, and may also comprise further communication information of the proxy such as e.g. FQDN or the like. With such information, the UE may establish the MA PDU session between the UE and the UPF, with both access paths/legs terminated at the UPF (step 12).

By way of the above example procedure, a MA PDU session may be established, and the proxy may be configured to (or be able to) steer the ATSSS in the thus established MA PDU session.

Figure 10 shows a sequence diagram illustrating an example of a procedure according to at least one example embodiment. The illustrated session establishment phase procedure assumes ATSSS in the architecture of Figure 3 as a basis, e.g. establishment of a MA PDU session with the proxy, e.g. a MPTCP proxy, as an external steering function with two UPFs as termination points of the MA PDU session or the different access paths/legs.

It is to be noted that this procedure assumes a single SMF to be used for both UPFs. If two SMFs are used for UPF1 and UPF2, coordination between both SMFs can be accomplished.

While most of the individual operations in the procedure of Figure 10 may correspond to those in the procedure of Figure 9, a repeated description thereof is omitted and reference is made to the related description in connection with Figure 9 above. Below, differences of the procedure of Figure 10 as compared with that of Figure 9 are disclosed.

In the initiation of the session establishment control, the SMF may detect that two UPFs are to be used, which may be accomplished by way of an indication from the UE (e.g. in the MA PDU Session Establishment Request) that usage of two UPFs is preferred or by using certain criteria applicable in this regard, like some of the aforementioned criteria.

Here, the SMF creates, as the steering rules, ATSSS Rules for the UE, FA Rules for any one of the two UPFs and MA Rules for the proxy (step 4), wherein the FA Rules for the two UPFs can be different from each other.

The SMF sends the FA Rules for the UPF1 and the allocated/usable proxy port and/or IP address to the UPF1 (step 7). The UPF1 stores the received information for the MA PDU Session and allocates a link-specific IP address or prefix for the 3GPP access path/leg or the non-3GPP access path/leg (which the UPF1 serves), e.g. an IP address or prefix for usage (by the UE and the proxy) in the context of (performing or steering) the ATSSS multipath communication (step 8), and provides the link-specific IP address or prefix to SMF (step 9). Also, the SMF sends the FA Rules for the UPF2 and the allocated/usable proxy port and/or IP address to the UPF2 (step 10). The UPF2 stores the received information for the MA PDU Session and allocates a link-specific IP address or prefix for the 3GPP access path/leg or the non-3GPP access path/leg (which the UPF2 serves), e.g. an IP address or prefix for usage (by the UE and the proxy) in the context of (performing or steering) the ATSSS multipath communication (step 11), and provides the link-specific IP address or prefix to SMF (step 12). Then, the SMF sends the MA Rules and the two link-specific IP addresses or prefixes (which are allocated by the UPF1 and the UPF2, respectively) to the proxy (step 13), and sends the ATSSS Rules and the two link-specific IP addresses or prefixes (which are allocated by the UPF1 and the UPF2, respectively) as well as proxy information to the UE (step 14). The thus provided proxy information comprise the allocated/usable proxy port and/or IP address, and may also comprise further communication information of the proxy such as e.g. FQDN or the like. With such information, the UE may establish the MA PDU session between the UE and the UPFs, with each one of the two access paths/legs terminated at one of the UPF1 and the UPF2 (step 15).

By way of the above example procedure, a MA PDU session may be established, and the proxy may be configured to (or be able to) steer the ATSSS in the thus established MA PDU session.

It is to be noted that the term "link-specific IP address/es or prefix/es" may be referred to as "path-specific IP address/es or prefix/es".

Further, it is to be noted that, in conjunction with example embodiments described herein, IP is adopted/assumed as an example (layer 3) protocol being used such that references are made to "IP address/es" and "path-specific IP address/es or prefix/es". Yet, example embodiments are not limited thereto, and any applicable/feasible protocol other than IP can also be used. Hence, any references to "IP address/es" and "path-specific IP address/es or prefix/es" are generally meant as references to "address/es" and "path-specific address/es or prefix/es" of the used protocol, respectively.

In at least one example embodiment, the aforementioned rules may have, at least, the following properties, effects or meanings.

An ATSSS rule may be applied in a communication function element or instance, e.g. a UE, for distributing UL traffic (e.g. to different access paths/legs), and may include one or more of traffic descriptor, access selection descriptor, steering mode and steering functionality.

An MA rule may be applied in an external steering function element or instance, e.g. a proxy, for distributing DL traffic (e.g. to different access paths/legs) .

An FA rule may be applied in a user plane function element or instance, e.g. a UPF, for correctly forwarding traffic, e.g. packets, between the communication function element or instance, e.g. the UE, and the external steering function element or instance, e.g. the proxy.

Despite the example embodiment illustrations in Figures 9 and 10, it is to be noted that the aforementioned steps do not need to be performed in this order. For example, the proxy may be discovered/selected (at least) partly concurrently with or parallel to or even before the rules creation in any one of Figures 9 and 10, the provisions of rules and other information to UPF1 and UPF2 can be exchanged or can be performed (at least) partly concurrently with or parallel to each other in Figure 10, or the like.

In view of Figures 9 and 10, example embodiments may comprise the following processes in order to use an external proxy for a MA PDU session or potentially two single PDU sessions to different UPFs:
PCC creates PCC rules (which may be used for creating, e.g. by way of translation, ATSSS, MA and FA rules).
SMF derives the type of external proxy to be used and selects/fetches the proxy information, if not already provided by the UE.
SMF creates ATSSS rules and sends ATSSS rules to UE, e.g. via NAS.
SMF creates FA rules (for one UPF or two UPFs) and MA rules for the selected proxy.
SMF sends FA rules to UPF(s) to terminate the MA PDU session or the PDU sessions and sends MA rules to the external proxy.
SMF sends the selected proxy information (e.g. FQDNs, IP address(es), port/s or port number/s) to the UE.

It is to be noted that there is a N4^{∗}-like interface between the SMF and the proxy to forward a PDR, or a PDR may be negotiated between the SMF and the proxy (e.g. there may be an indirect non-N4^{∗} interface).

As regards proxy port/address identification, any port and/or any address of a proxy can be identified according to example embodiments.

According to at least one example embodiment, the proxy can have one CP address and one UP address. The proxy is first discovered/selected (e.g. by the SMF), and its CP address becomes known (e.g. at the SMF). Afterwards, the proxy is contacted (e.g. by the SMF) via its CP address and provides its UP address or its UP address and its port (e.g. to the SMF). The UP address (as the IP address) and/or the port of the proxy are transmitted (e.g. from the SMF) to the UE and the UPF/s. Otherwise, the UP address and CP address of the proxy can be the same, and only a port is provided by the proxy (e.g. to the SMF) after discovers/selection thereof.

Figure 11 shows sequence diagrams (Figures 11(A) and 11(B)) illustrating examples of procedures of proxy port/address identification according to at least one example embodiment. Any one of the procedures of Figure 11(A) and Figure 11(B) can be applied in step 6 of Figures 9 and 10, respectively.

The procedure of Figure 11(A) is applicable when the SMF has/knows a set (e.g. list) of available proxy ports and/or IP addresses. Such information may be provided e.g. in the MA PDU Session Establishment Request from the UE to the SMF. Based thereon, the SMF may elect a port and/or an IP addresses out of the available ports and/or IP addresses (step 1), and may request grant of usage of the elected port and/or IP address at/by the proxy (step 2). Thereupon, the proxy may check usability of the elected port and/or IP address for which usage grant is requested (step 3), and may provide grant of usage of the elected port and/or IP address to the SMF (step 4) if the checking result is affirmative. Otherwise, no grant is provided and/or refusal of the request is indicated (not shown). Based thereon, the SMF can identify the port and/or IP addresses of the external proxy, which is to be used in the session/s, e.g. the access traffic multipath communication.

As an alternative in the case that the SMF has/knows a set (e.g. list) of available proxy ports and/or IP addresses, the SMF may elect the port and/or IP address to be used out of the available ports and/or IP addresses, without requesting usage grant thereof. Namely, the SMF may just select/identify one port and/or IP address that is to be used by the proxy. However, the procure of Figure 11(A), including requesting grant of the elected port and/or IP address, is beneficial as multiple SMFs can share the same proxy and/or the elected port and/or IP address can be blocked for other reasons.

The procedure of Figure 11(B) is applicable when the SMF does not have/know a set (e.g. list) of available proxy ports and/or IP addresses. In this case, the SMF may request assignment of a usable port and/or IP address at/by the proxy (step 1). Thereupon, the proxy may check usability of its available ports and/or IP addresses and choose an available and usable port and/or IP address (step 2). Then, the proxy may provide assignment of usage of the chosen port and/or IP address to the SMF (step 3) if choosing some port was successful. Otherwise, no assignment is provided and/or refusal of the request is indicated (not shown). Based thereon, the SMF can identify the port and/or IP addresses of the external proxy, which is to be used in the session/s, e.g. the access traffic multipath communication.

It is to be noted that a port of the proxy, which is usable, is a port corresponding to or applicable in the applicable user plane protocol. For example, if the port is a MPTCP port, e.g. the user plane protocol is TCP, a TCP port is to be used. Also, an IP address of the proxy, which is usable, is an IP address corresponding to or applicable in the applicable user plane protocol.

In the following, various examples and specifics of a preparation phase are described with reference to Figures 12 and 13. In this regard, it is assumed that the preparation phase involves preparation steps to make use of an external steering function, and includes two stages of registration and discovery & selection of the external steering function. In view of the procedures of Figures 9 and 10, it is to be noted that the registration phase may take place prior to and independent of the illustrated session establishment phase, while the discovery & selection phase may take place as part of the illustrated session establishment phase, e.g. step 5 of Figures 9 and 10, respectively.

Figure 12 shows a sequence diagram illustrating an example of procedures of proxy registration and discovery/selection, e.g. applicable for an untrusted proxy, according to at least one example embodiment. Here, the (profile of) the external steering function, e.g. the proxy, is, by way of example, stored in the UDR, e.g. outside the trust domain of the network operator.

In the registration stage, the proxy or an associated AF registers, e.g. requests, initiates or causes registration of, proxy information in the UDR (step R1). The proxy information, building the basis of or corresponding to the profile, may include e.g. FQDN/IP address, port or port number, AppID, DNN/S-NSSAI, UE Group ID, or the like. Accordingly, the profile may serve as a basis for proxy discovery and selection, e.g. discovery and selection criteria, when a proxy is to be discovered/selected by the network (e.g. the SMF) amongst several possible candidate proxies.

The NEF authenticates the proxy or the associated AF, which sent the proxy information for registration, based on the provided information (step R2) and, if successful, forwards the proxy information to the UDR (step R3). The UDR stores the proxy information as/in the proxy profile (step R4). Accordingly, the UDR(s) may maintain the profiles of all untrusted proxies as (external) steering functions.

In the discovery/selection stage, e.g. when a MA PDU session is or two PDU sessions are being established, in order to select an applicable proxy, the SMF refers to the proxy information/profiles in the UDR(s). For example, the SMF may discover available proxy (or proxies) by providing information such as e.g. DNN/S-NSSAI, AppID, UE Group ID, etc. to the UDR (step DS1), which may be accomplished either directly (as illustrated in Figure 12) or indirectly via the NEF. If multiple UDRs are deployed in the network, the proxy information/profiles may be mapped to different groups of UE via UE Group IDs that are stored in different UDRs, and the SMF first discovers and selects the correct UDR with the UE Group ID, e.g. by interacting with the NRF. Thereupon, the (correct) UDR provides the appropriate/suitable proxy/proxies, e.g. the proxy information/profiles, to the SMF (step DS2), and the SMF discovers/selects, e.g. identifies, the appropriate and usable proxy (step DS3).

Accordingly, the SMF may fetch the proxy information/profile from the UDR, which is returned accordingly.

As an alternative, the SMF may subscribe to the proxy information/profile from the UDR, which is notified accordingly. That is, the SMF may subscribe with the UDR for notifications regarding availability of a proxy for given data or criteria, such as e.g. DNN/S-NSSAI, AppID, or UE Group ID, etc., whenever the proxy or an associated AF provides corresponding/complying proxy information via the NEF to the UDR. If the SMF has received a notification regarding the presence of proxy according to the data or criteria, e.g. for a given DNN/S-NSSAI, AppID, or UE Group ID, and session establishment is performed for the corresponding UE (or is part of the UE Group), the SMF can directly fetch the data from the UDR (or via the UDM) without NEF interaction.

In the case that multiple proxies are returned/notified, e.g. discovered, the SMF may select the appropriate proxy information, e.g. the appropriate proxy, based on multiple criteria, such as e.g. subscription information, UE preference indicated over NAS, load balancing, capabilities supported, or the like.

The above procedure considers the scenario that the steering function/proxy is maintained by a third party without any intention to influence the traffic forwarding. The network can still make its own decision on the traffic that the external steering function/proxy can be applied to.

However, the related teaching can be extended to another scenario where a third party (e.g. Amazon or Apple) provide an AF (e.g. Prime Video or Siri server) together with the steering function/proxy. In this case, the third party can influence traffic to be routed to its own steering function, if supported by the network. For example, an AF indicates to the network that, for a certain type of application traffic, this traffic is to be forwarded to the external proxy which may be collocated with the AF and the proxy information (incl. proxy IP, port etc.) is to be sent to the UE. The (dynamic) negotiation between AF and network may be done e.g. done via the NEF.

Figure 13 shows a sequence diagram illustrating an example of procedures of proxy registration and discovery/selection, e.g. applicable for a trusted proxy, according to at least one example embodiment. Here, the (profile of) the external steering function, e.g. the proxy, is, by way of example, stored in the NRF, e.g. within the trust domain of the network operator.

In the registration stage, the proxy or an associated AF registers proxy information in the NRF (step R1). The proxy information, building the basis of or corresponding to the profile, may include e.g. FQDN/IP address, port or port number, AppID, DNN/S-NSSAI, UE Group ID, or the like. Accordingly, the profile may serve as a basis for proxy discovery and selection, e.g. discovery and selection criteria, when a proxy is to be discovered/selected by the network (e.g. the SMF) amongst several possible candidate proxies. The NRF stores the proxy information as/in the proxy profile (step R2).

It is to be noted that the profile of the proxy may be registered in the NRF with (i) direct registration from the proxy or an associated AF (as illustrated in Figure 13), (ii) indirect registration as/when the proxy or the associated AF is to first authenticate itself via the NEF, and (iii) configuration from OAM. Accordingly, the NRF(s) may maintain the profiles of all trusted and optionally also all untrusted proxies (registered via the NEF) as (external) steering functions.

The discovery/selection stage corresponds, in some example embodiments, to that in the procedure of Figure 12, and a repeated description thereof is omitted and reference is made to the related description in connection with Figure 12 above.

Here, the NRF may additionally return to the SMF not only the proxy/proxies, e.g. the proxy information/profile, but also an indication whether the proxy/proxies is/are external "trusted" or "untrusted". In case multiple proxies are returned, SMF will select the appropriate proxy information based on various criteria like subscription information, UE preference indicated to the network, load balancing demands, capabilities supported, etc.).

According to example embodiments, there are provided one or more repository function elements or instances having/exhibiting one or more of the functionalities (including one or more of obtaining, storing, registering, holding, providing, etc. of certain information) described above for NRF and/or UDR, and/or there are provided one or more network exposure function elements or instances having/exhibiting one or more of the functionalities (including one or more of obtaining, holding, providing, authenticating, etc. of certain information) described above for NEF.

By virtue of at least one example embodiment, as evident from the above, there are provided measures/mechanisms for enabling/realizing external steering of access traffic multipath communication in a mobile communication system (e.g. an external access traffic multipath communication steering function).

According to at least one example embodiment, one or more of the following effects can thus be achieved when an external steering function (proxy) located outside of and connected to the UPF functionality is used for steering access traffic multipath communication.

It can be determined that an external steering function (proxy) is to be used when one or more sessions for access traffic multipath communication (such as a MA PDU session or two PDU sessions) are established. That is, feasible triggers for usage of an external steering function (proxy) are provided.

An appropriate external steering function (proxy) can be selected.

An external steering function (proxy) can be properly "instantiated". That is, it is enabled that proper rules are created for and provided to the involved entities, such as the UE and the proxy, and it is enabled that information (relating to the external steering functionality) is available at the entity creating such rules, such as the SMF.

An interface between user plane functionality, such as the UPF, and the external steering function (proxy) is provided. For example, the user plane functionality, such as the UPF, is enabled to distinguish between different access paths/legs, and a secure connection between both functions is enabled.

The above-described functionality as well as its related operations, procedures, methods and processes may be implemented by respective functional elements, entities, modules, units, processors, or the like, as described below. These functional elements, entities, modules, units, processors, or the like, e.g. the implementation of one or more example embodiments, may be realized in a cloud environment, by SDN, by NFV/NFVI, or the like.

While in the foregoing example embodiments are described mainly with reference to operations, procedures, methods and processes, corresponding example embodiments also cover respective apparatuses, entities, modules, units, network nodes and/or systems, including software and/or hardware thereof.

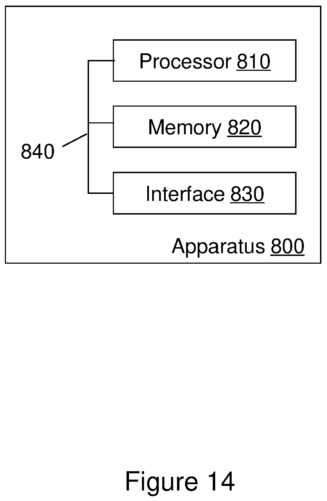

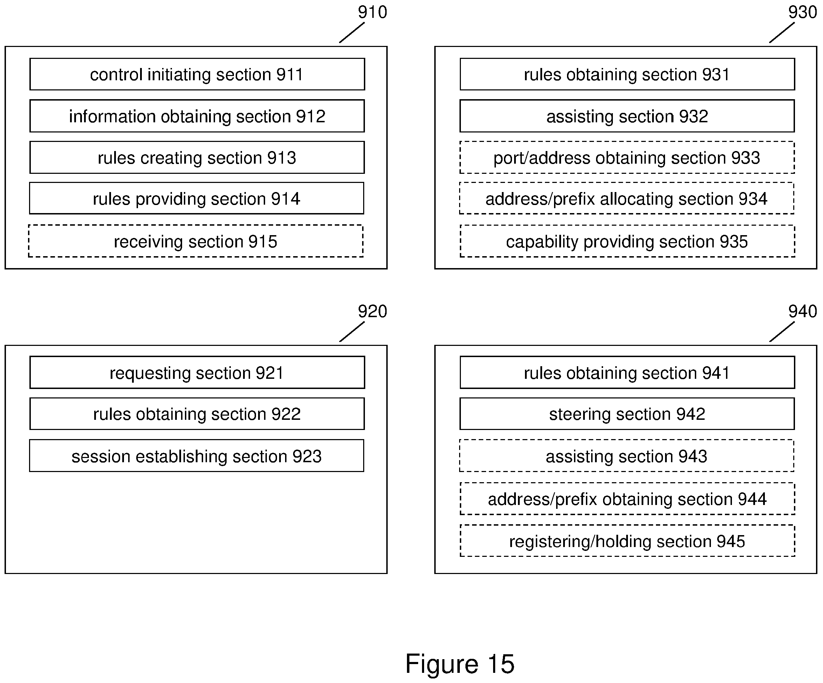

Respective example embodiments are described below referring to Figures 14 and 15, while for the sake of brevity reference is made to the detailed description of respective corresponding configurations/setups, architectures, schemes, processes, sequences, methods as well as functionalities, principles and operations according to Figures 2 to 13.

In Figures 14 and 15, the blocks are configured to perform respective methods, procedures and/or functions as described above. The entirety of blocks are configured to perform the methods, procedures and/or functions as described above, respectively. With respect to Figures 14 and 15, it is to be noted that the individual blocks are meant to illustrate respective functional blocks implementing a respective function, process or procedure, respectively. Such functional blocks are implementation-independent, e.g. may be implemented by means of hardware or software or combination thereof, respectively.

Further, in Figures 14 and 15, only those functional blocks are illustrated, which relate to any one of the above-described methods, procedures and/or functions. A skilled person will acknowledge the presence of any other functional blocks utilized for an operation of respective structural arrangements, such as e.g. a power supply, a central processing unit, respective memories or the like. Among others, one or more memories are provided for storing programs or program instructions for controlling or enabling the individual functional entities or any combination thereof to operate as described herein in relation to example embodiments.

Figure 14 shows a schematic diagram illustrating an example of a structure of apparatuses according to at least one example embodiment. Herein, an apparatus can represent a physical entity or component, e.g. a structural device implementing a specific network element, entity or function or the functionality thereof as such, or a functional or logical entity or component. For example, the illustrated apparatus may be realized in or by a server or the like in a cloud environment, e.g. by a cloud-based implementation.

As indicated in Figure 14, according to at least one example embodiment, an apparatus 800 may comprise or realize at least one processor 810 and at least one memory 820 (and possibly also at least one interface 830), which may be operationally connected or coupled, for example by a bus 840 or the like, respectively.

The processor 810 and/or the interface 830 of the apparatus 800 may also include a modem or the like to facilitate communication over a (hardwire or wireless) link, respectively. The interface 830 of the apparatus 800 may include a transmitter, receiver or transceiver connected or coupled to one or more antennas, antenna units, such as antenna arrays or communication facilities or means for (hardwire or wireless) communications with the linked, coupled or connected device(s), respectively. The interface 830 of the apparatus 800 is generally configured to communicate with at least one other apparatus, device, node or entity (in particular, the interface thereof).

The memory 820 of the apparatus 800 may represent a (non-transitory/tangible) storage medium (e.g. RAM, ROM, EPROM, EEPROM, etc.) and store respective software, programs, program products, macros or applets, etc. or parts of them, which may be assumed to comprise program instructions or computer program code that, when executed by the respective processor, enables the respective electronic device or apparatus to operate in accordance with example embodiments described herein. Further, the memory 820 of the apparatus 800 may (comprise a database to) store any data, information, or the like, which is used in the operation of the apparatus.

According to various example embodiments, respective apparatuses (and/or parts thereof) may represent means for performing respective operations and/or exhibiting respective functionalities, and/or the respective devices (and/or parts thereof) may have functions for performing respective operations and/or exhibiting respective functionalities.

In view of the above, the illustrated apparatus 800 can be used in practicing one or more of the example embodiments, as described herein.

When in the subsequent description it is stated that the processor (or some other means) is configured to perform some function, this is to be construed to be equivalent or corresponding to a description stating that a (i.e. at least one) processor or corresponding circuitry, potentially in cooperation with a computer program code stored in the memory of the respective apparatus or otherwise available (it should be appreciated that the memory may also be an external memory or provided/realized by a cloud service or the like), is configured to cause the apparatus to perform at least the thus mentioned function. It should be appreciated that herein processors, or more generally processing portions, should not be only considered to represent physical portions of one or more processors, but may also be considered as a logical division of the referred processing tasks performed by one or more processors.

According to at least one example embodiment, the illustrated apparatus 800 may represent or realize/embody a (part of a) a session management function element or instance or an element, function or entity of similar/comparable functionality or operability, in a mobile communication system, such as a SMF in a 3GPP network or system. Hence, the apparatus 800 may be configured to perform a procedure and/or exhibit a functionality and/or implement a mechanism, as described (for a SMF) in any one of Figures 1 to 13.

Accordingly, the apparatus 800 may be caused or the apparatus 800 or its at least one processor 810 (possibly together with computer program code stored in its at least one memory 820) may be configured to initiate control of establishment of at least one user plane session for access traffic multipath communication across multiple accesses via different access paths between a communication function element or instance and at least one user plane function element or instance, obtain communication information of an external steering function element or instance to be used for steering access traffic multipath communication in the at least one user plane session, said external steering function element or instance located outside of and connected to the at least one user plane function element or instance, create access traffic multipath communication rules, forwarding action rules and multi access rules for access traffic multipath communication in the at least one user plane session, and provide the access traffic multipath communication rules and the communication information of the external steering function element or instance to the communication function element or instance, the forwarding action rules to the at least one user plane function element or instance, and the multi access rules to the steering function element or instance.

According to at least one example embodiment, the illustrated apparatus 800 may represent or realize/embody a (part of a) a communication function element or instance or an element, function or entity of similar/comparable functionality or operability, in a mobile communication system, such as a UE in a 3GPP network or system. Hence, the apparatus 800 may be configured to perform a procedure and/or exhibit a functionality and/or implement a mechanism, as described (for a UE) in any one of Figures 1 to 13.

Accordingly, the apparatus 800 may be caused or the apparatus 800 or its at least one processor 810 (possibly together with computer program code stored in its at least one memory 820) may be configured to request establishment of at least one user plane session for access traffic multipath communication across multiple accesses via different access paths between the communication function element or instance and at least one user plane function element or instance, obtain access traffic multipath communication rules for access traffic multipath communication in the at least one user plane session and communication information of an external steering function element or instance, which is to be used for steering access traffic multipath communication in the at least one user plane session and is located outside of and connected to the at least one user plane function element or instance, from a session management function element or instance, and establish the at least one user plane session based on the access traffic multipath communication rules and the communication information of the external steering function element or instance.

According to at least one example embodiment, the illustrated apparatus 800 may represent or realize/embody a (part of a) a user plane function element or instance or an element, function or entity of similar/comparable functionality or operability, in a mobile communication system, such as a UPF in a 3GPP network or system. Hence, the apparatus 800 may be configured to perform a procedure and/or exhibit a functionality and/or implement a mechanism, as described (for a UPF) in any one of Figures 1 to 13.

Accordingly, the apparatus 800 may be caused or the apparatus 800 or its at least one processor 810 (possibly together with computer program code stored in its at least one memory 820) may be configured to obtain forwarding action rules for access traffic multipath communication in at least one user plane session from a session management function element or instance, and assist establishment of the at least one user plane session for access traffic multipath communication across multiple accesses via different access paths between a communication function element or instance and the user plane function element or instance, wherein an external steering function element or instance, located outside of and connected to the user plane function element or instance, is to be used for steering access traffic multipath communication in the at least one user plane session, by terminating at least one of the access paths based on the forwarding action rules.

According to at least one example embodiment, the illustrated apparatus 800 may represent or realize/embody a (part of a) a steering function element or instance or an element, function or entity of similar/comparable functionality or operability, in a mobile communication system, such as a (MPTCP) proxy in a 3GPP network or system. Hence, the apparatus 800 may be configured to perform a procedure and/or exhibit a functionality and/or implement a mechanism, as described (for a proxy) in any one of Figures 1 to 13.

Accordingly, the apparatus 800 may be caused or the apparatus 800 or its at least one processor 810 (possibly together with computer program code stored in its at least one memory 820) may be configured to obtaining multi access rules for access traffic multipath communication in at least one user plane session from a session management function element or instance, and steering access traffic multipath communication (in the at least one user plane session for access traffic multipath communication) across multiple accesses via different access paths between a communication function element or instance and at least one user plane function element or instance based on the multi access rules, wherein the steering function element or instance is located outside of and connected to the at least one user plane function element or instance.

As mentioned above, an apparatus according to at least one example embodiment may be structured by comprising respective one or more units or means or circuitries for performing corresponding operations, procedures and/or functions. For example, such one or more units or means or circuitries may be implemented/realized on the basis of an apparatus structure, as illustrated in Figure 14, e.g. by one or more processors 810, one or more memories 820, one or more interfaces 830, or any combination thereof.

Figure 15 shows a schematic diagram illustrating an example of a structure of apparatuses according to at least one example embodiment.

As shown in Figure 15, an apparatus 910 according to at least one example embodiment may represent or realize/embody a (part of a) session management function element or instance, or an element, function or entity of similar/comparable functionality or operability, in a mobile communication system, such as a SMF in a 3GPP network or system. Hence, the apparatus 910 may be configured to perform a procedure and/or exhibit a functionality and/or implement a mechanism, as described (for a SMF) in any one of Figures 1 to 13.

Such apparatus 910 may comprise (at least) one or more unit/means/circuitry, denoted by control initiating section 911, which represent any implementation for (or configured to) initiating (initiate) control of establishment of at least one user plane session for access traffic multipath communication across multiple accesses via different access paths between a communication function element or instance and at least one user plane function element or instance, one or more unit/means/circuitry, denoted by information obtaining section 912, which represent any implementation for (or configured to) obtaining (obtain) communication information of an external steering function element or instance to be used for steering access traffic multipath communication in the at least one user plane session, said external steering function element or instance located outside of and connected to the at least one user plane function element or instance, one or more unit/means/circuitry, denoted by rules creating section 913, which represent any implementation for (or configured to) creating (create) access traffic multipath communication rules, forwarding action rules and multi access rules for access traffic multipath communication in the at least one user plane session, and one or more unit/means/circuitry, denoted by rules providing section 914, which represent any implementation for (or configured to) providing (provide) the access traffic multipath communication rules and the communication information of the external steering function element or instance to the communication function element or instance, the forwarding action rules to the at least one user plane function element or instance, and the multi access rules to the steering function element or instance.

Further, such apparatus 910 may additionally/optionally further comprise one or more unit/means/circuitry, denoted by receiving section 915, which represent any implementation for (or configured to) receiving (receive) a request for establishment of the at least one user plane session for access traffic multipath communication from the communication function element or instance

As shown in Figure 15, an apparatus 920 according to at least one example embodiment may represent or realize/embody a (part of a) communication function element or instance, or an element, function or entity of similar/comparable functionality or operability, in a mobile communication system, such as a UE in a 3GPP network or system. Hence, the apparatus 910 may be configured to perform a procedure and/or exhibit a functionality and/or implement a mechanism, as described (for a UE) in any one of Figures 1 to 13.

Such apparatus 920 may comprise (at least) one or more unit/means/circuitry, denoted by requesting section 911, which represent any implementation for (or configured to) requesting (request) establishment of at least one user plane session for access traffic multipath communication across multiple accesses via different access paths between the communication function element or instance and at least one user plane function element or instance, one or more unit/means/circuitry, denoted by rules obtaining section 912, which represent any implementation for (or configured to) obtaining (obtain) access traffic multipath communication rules for access traffic multipath communication in the at least one user plane session and communication information of an external steering function element or instance, which is to be used for steering access traffic multipath communication in the at least one user plane session and is located outside of and connected to the at least one user plane function element or instance, from a session management function element or instance, and one or more unit/means/circuitry, denoted by session establishing section 913, which represent any implementation for (or configured to) establishing (establish) the at least one user plane session based on the access traffic multipath communication rules and the communication information of the external steering function element or instance.

As shown in Figure 15, an apparatus 930 according to at least one example embodiment may represent or realize/embody a (part of a) user plane function element or instance, or an element, function or entity of similar/comparable functionality or operability, in a mobile communication system, such as a UPF in a 3GPP network or system. Hence, the apparatus 910 may be configured to perform a procedure and/or exhibit a functionality and/or implement a mechanism, as described (for a UPF) in any one of Figures 1 to 13.

Such apparatus 930 may comprise (at least) one or more unit/means/circuitry, denoted by rules obtaining section 931, which represent any implementation for (or configured to) obtaining (obtain) forwarding action rules for access traffic multipath communication in at least one user plane session from a session management function element or instance, and one or more unit/means/circuitry, denoted by assisting section 932, which represent any implementation for (or configured to) assisting (assist) establishment of the at least one user plane session for access traffic multipath communication across multiple accesses via different access paths between a communication function element or instance and the user plane function element or instance, wherein an external steering function element or instance, located outside of and connected to the user plane function element or instance, is to be used for steering access traffic multipath communication in the at least one user plane session, by terminating at least one of the access paths based on the forwarding action rules.

Further, such apparatus 930 may additionally/optionally further comprise one or more unit/means/circuitry, denoted by port/address obtaining section 933, which represent any implementation for (or configured to) obtaining (obtain) port and/or (IP) address information of a port and/or an (IP) address of the external steering function element or instance to be used for the at least one user plane session, and/or one or more unit/means/circuitry, denoted by address/prefix allocating section 934, which represent any implementation for (or configured to) allocating (allocate) path-specific (IP) addresses or prefixes for the different access paths (and providing (provide) the path-specific (IP) addresses or prefixes to the session management function element or instance), or allocating (allocate) a path-specific (IP) address or prefix for one of the different access paths (and providing (provide) the path-specific (IP) address or prefix to the session management function element or instance, and/or one or more unit/means/circuitry, denoted by capability providing section 934, which represent any implementation for (or configured to) providing (provide) capability information indicating whether the user plane function element or instance supports local steering of the access traffic multipath communication by the user plane function element or instance and/or supports steering of the access traffic multipath communication by an external steering function element or instance.

As shown in Figure 15, an apparatus 940 according to at least one example embodiment may represent or realize/embody a (part of a) steering function element or instance, or an element, function or entity of similar/comparable functionality or operability, in a mobile communication system, such as a (MPTCP) proxy in a 3GPP network or system. Hence, the apparatus 910 may be configured to perform a procedure and/or exhibit a functionality and/or implement a mechanism, as described (for a proxy) in any one of Figures 1 to 13.

Such apparatus 940 may comprise (at least) one or more unit/means/circuitry, denoted by rules obtaining section 941, which represent any implementation for (or configured to) obtaining (obtain) multi access rules for access traffic multipath communication in at least one user plane session from a session management function element or instance, and one or more unit/means/circuitry, denoted by steering section 942, which represent any implementation for (or configured to) steering (steer) access traffic multipath communication across multiple accesses via different access paths between a communication function element or instance and at least one user plane function element or instance based on the multi access rules. In this regard, the steering function element or instance is located outside of and connected to the at least one user plane function element or instance.

Further, such apparatus 940 may additionally/optionally further comprise one or more unit/means/circuitry, denoted by assisting section 943, which represent any implementation for (or configured to) assisting (assist) identification of port and/or (IP) address information of a port and/or an (IP) address of the steering function element or instance to be used for the at least one user plane session at the session management function element or instance, and/or one or more unit/means/circuitry, denoted by address/prefix obtaining section 944, which represent any implementation for (or configured to) obtaining (obtain) path-specific (IP) addresses or prefixes for the different access paths from the session management function element or instance, and/or one or more unit/means/circuitry, denoted by registering/holding section 945, which represent any implementation for (or configured to) requesting/initiating/causing (request/initiate/cause) registration of profile information of the steering function element or instance at a repository function element or instance, directly and/or via a network exposure function element or instance, or holding (hold) profile information of the steering function element or instance.

For further details regarding the operability/functionality of the apparatuses (or units/means thereof) according to example embodiments, reference is made to the above description in connection with any one of Figures 1 to 13, respectively.

According to example embodiments, any one of the (at least one) processor, the (at least one) memory and the (at least one) interface, as well as any one of the illustrated units/means, may be implemented as individual modules, chips, chipsets, circuitries or the like, or one or more of them can be implemented as a common module, chip, chipset, circuitry or the like, respectively.

According to example embodiments, a system may comprise any combination of any depicted or described apparatuses and other network elements or functional entities, which are configured to cooperate as described above.

In general, it is to be noted that respective functional blocks or elements according to above-described aspects can be implemented by any means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Generally, a system architecture of a (tele)communication network including a mobile communication system where some examples of example embodiments are applicable may include an architecture of one or more communication networks including wireless access network sub-/system(s) and possibly core network(s). Such an architecture may include one or more communication network control elements or functions, such as e.g. access network elements, radio access network elements, access service network gateways or base transceiver stations, like a base station, an access point, a NodeB (NB), an eNB or a gNB, a distributed or a centralized unit, which controls a respective coverage area or cell(s) and with which one or more communication stations such as communication elements or functions, like user devices or terminal devices, like a UE, or another device having a similar function, such as a modem chipset, a chip, a module etc., which can also be part of a station, an element, a function or an application capable of conducting a communication, such as a UE, an element or function usable in a machine-to-machine communication architecture, or attached as a separate element to such an element, function or application capable of conducting a communication, or the like, are capable to communicate via one or more channels via one or more communication beams for transmitting several types of data in a plurality of access domains. Furthermore, core network elements or network functions, such as gateway network elements/functions, mobility management entities, a mobile switching center, servers, databases and the like may be included.

The general functions and interconnections of the described elements and functions, which also depend on the actual network type, would be apparent to those skilled in the art and described in corresponding specifications, so that a detailed description thereof is omitted herein. It should be appreciated that several additional network elements and signaling links may be employed for a communication to or from an element, function or application, like a communication endpoint, a communication network control element, such as a server, a gateway, a radio network controller, and other elements of the same or other communication networks besides those described in detail herein below.

A communication network architecture as being considered in examples of example embodiments may also be able to communicate with other networks, such as a public switched telephone network or the Internet, including the Internet-of-Things. The communication network may also be able to support the usage of cloud services for virtual network elements or functions thereof, wherein it is to be noted that the virtual network part of the (tele)communication network can also be provided by non-cloud resources, e.g. an internal network or the like. It should be appreciated that network elements of an access system, of a core network etc., and/or respective functionalities may be implemented by using any node, host, server, access node or entity etc. for such a usage. Generally, a network function can be implemented either as a network element on a dedicated hardware, as a software instance running on a dedicated hardware, or as a virtualized function instantiated on an appropriate platform, e.g. a cloud infrastructure.

Any method step is to be implemented as software or by hardware without changing the example embodiments. Such software may be software code independent and can be specified using any known or future developed programming language, such as e.g. Java, C++, C, and Assembler, as long as the functionality defined by the method steps is preserved. Such hardware may be hardware type independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components. A device/apparatus may be represented by a semiconductor chip, a chipset, or a (hardware) module comprising such chip or chipset; this, however, does not exclude the possibility that a functionality of a device/apparatus or module, instead of being hardware implemented, be implemented as software in a (software) module such as a computer program or a computer program product comprising executable software code portions for execution/being run on a processor. A device may be regarded as a device/apparatus or as an assembly of more than one device/apparatus, whether functionally in cooperation with each other or functionally independently of each other but in a same device housing, for example.

Apparatuses and/or units/means or parts thereof can be implemented as individual devices, but this does not exclude that they may be implemented in a distributed fashion throughout the system. Similar principles would be apparent to a skilled person.

Software in the sense of the present description comprises software code as such comprising code means or portions or a computer program or a computer program product for performing the respective functions, as well as software (or a computer program or a computer program product) embodied on a tangible medium such as a computer-readable (storage) medium having stored thereon a respective data structure or code means/portions or embodied in a signal or in a chip, potentially during processing thereof.

The example embodiments also cover any combination of method steps and operations described above, and any combination of nodes, apparatuses, modules, function, elements or instances described above.

In view of the above, there are provided measures for enabling/realizing external steering of access traffic multipath communication in a mobile communication system, e.g. an external access traffic multipath communication steering function. Some such measures comprise that a session management function element or instance in a mobile communication system initiates control of establishment of at least one user plane session for access traffic multipath communication, obtains communication information of an external steering function element or instance to be used for steering access traffic multipath communication in the at least one user plane session, creates access traffic multipath communication rules, forwarding action rules and multi access rules for access traffic multipath communication in the at least one user plane session, and provides the access traffic multipath communication rules and the communication information of the external steering function element or instance to the communication function element or instance.

Even though the example embodiments are described above with reference to the accompanying drawings, it is to be understood that the example embodiments are not restricted thereto. Rather, various modifications may be apparent to those skilled in the art without departing from the scope of the example embodiments.

### List of acronyms and abbreviations

- 3GPP: 3rd Generation Partnership Project
- 5G: 5^{th} Generation
- AF: Application Function
- App: Application
- ATSSS: Access Traffic Steering, Switching and Splitting
- ATSSS-LL: ATSSS Lower Layer
- CP: Control Plane
- DL: Downlink
- DN: Data Network
- DNN: Data Network Name
- FA: Forwarding Action
- FAR: Forwarding Action Rule
- FQDN: Fully Qualified Domain Name
- FRER: Frame Replication and Elimination for Reliability
- IP: Internet Protocol
- MA: Multi Access
- MAR: Multi Access Rules
- MPQUIC: Multipath QUIC
- MPTCP: Multipath TCP
- NAS: Non Access Stratum
- NEF: Network Exposure Function
- NF: Network Function
- NFV: Network Function Virtualisation
- NFVI: Network Function Virtualisation Infrastructure
- NRF: Network Repository Function
- NSSAI: Network Slice Selection Assistance Information
- OAM: Operation, Administration and Maintenance
- PCC: Policy and Charging Control
- PCF: Policy Control Function
- PDU: Packet Data Unit
- PDR: Packet Detection Rule
- PMF: Performance Measurement Functionality
- RTT: Round Trip Time
- SDN: Software-Defined Networking
- SMF: Session Management Function
- S-NSSAI: Single NSSAI
- TCP: Transmission Control Protocol
- UDM: Unified Data Management
- UDR: Unified Data Repository
- UE: User Equipment
- UL: Uplink
- UP: User Plane

## Claims

1. A method of a session management function element or instance in a mobile communication system, comprising:
initiating control of establishment of at least one user plane session for access traffic multipath communication across multiple accesses via different access paths between a communication function element or instance and at least one user plane function element or instance,
obtaining communication information of an external steering function element or instance to be used for steering access traffic multipath communication in the at least one user plane session, said external steering function element or instance located outside of and connected to the at least one user plane function element or instance,
creating access traffic multipath communication rules, forwarding action rules and multi access rules for access traffic multipath communication in the at least one user plane session, and
providing the access traffic multipath communication rules and the communication information of the external steering function element or instance to the communication function element or instance, the forwarding action rules to the at least one user plane function element or instance, and the multi access rules to the steering function element or instance.

2. The method according to claim 1, said initiating comprising:
determining to use an external steering function element or instance for steering access traffic multipath communication in the at least one user plane session, and/or
discovering and/or selecting an external steering function element or instance for steering access traffic multipath communication in the at least one user plane session.

3. The method according to claim 2, said determining is based on one or more of:
an indication of preferred or requested usage of an external steering function element or instance from the communication function element or instance,
capability information of the at least one user plane function element or instance, indicating that the at least one user plane function element or instance does not support local steering of the access traffic multipath communication by the at least one user plane function element or instance but supports steering of the access traffic multipath communication by an external steering function element or instance,
a network configuration or configuration information relating to access traffic multipath communication, and
profile information of an external steering function element or instance relating to data network-related information, slice-related information, a communication function element or instance, and/or a group of communication function elements or instances.

4. The method according to claim 3, wherein the indication comprises one or more of communication information of an external steering function element or instance to be used, and/or one or more of information, such as one or more of application information, slice-related information and data network-related information, indicating that an external steering function element or instance is to be used.

5. The method according to claim 3, wherein the capability information is provided by the at least one user plane function element or instance, or is fetched or subscribed via a profile of the at least one user plane function element or instance, stored in a repository function element or instance, from the repository function element or instance and/or via a network exposure function element or instance.

6. The method according to claim 3, wherein the network configuration or configuration information relating to access traffic multipath communication is configured in or by the session management function element or instance or a policy control function element or instance, and/or is based on one or more of capability information of the at least one user plane function element or instance, data network-related information and slice-related information.

7. The method according to claim 3, wherein the profile information is held by an external steering function element or instance or an associated application function, and/or is fetched from or subscribed to at a repository function element or instance, directly and/or via a network exposure function element or instance.

8. The method according to any one of claims 1 to 7, said obtaining comprising:
choosing and/or fetching one or more of the communication information of the external steering function element or instance, and/or
identifying port and/or IP address information of a port and/or an IP address of the external steering function element or instance to be used for the at least one user plane session.

9. The method according to claim 8, wherein
the one or more of the communication information is provided to the communication function element or instance, and/or
the port and/or IP address information is provided, as part of the communication information of the external steering function element or instance, to the communication function element or instance and the at least one user plane function element or instance.

10. The method according to claim 8 or 9, said identifying comprising:
electing a port and/or an IP address from a set of available ports and/or IP addresses of the external steering function element or instance, or
requesting and acquiring grant of usage of an elected port and/or IP address, which is elected from a set of available ports and/or IP addresses of the external steering function element or instance, from the external steering function element or instance, or
requesting and acquiring assignment of a port and/or an IP address from the external steering function element or instance.

11. A method of a communication function element or instance in a mobile communication system, comprising:
requesting establishment of at least one user plane session for access traffic multipath communication across multiple accesses via different access paths between the communication function element or instance and at least one user plane function element or instance,
obtaining access traffic multipath communication rules for access traffic multipath communication in the at least one user plane session and communication information of an external steering function element or instance, which is to be used for steering access traffic multipath communication in the at least one user plane session and is located outside of and connected to the at least one user plane function element or instance, from a session management function element or instance, and
establishing the at least one user plane session based on the access traffic multipath communication rules and the communication information of the external steering function element or instance.

12. The method according to claim 11, said requesting comprising:
providing an indication of preferred or requested usage of an external steering function element or instance for steering access traffic multipath communication in the at least one user plane session to the session management function element or instance,
wherein the indication comprises one or more of communication information of an external steering function element or instance to be used, and/or one or more of information, such as application information, data network-related information or slice-related information, indicating that an external steering function element or instance is to be used.

13. The method according to claim 11 or 12, said obtaining comprising:
obtaining port and/or IP address information of a port and/or an IP address of the external steering function element or instance to be used for the at least one user plane session, and/or
obtaining path-specific IP addresses or prefixes for the different access paths.

14. The method according to claim 13, wherein
in the case that a single user plane function element or instance is used for the different access paths, the at least one user plane session is established to the single user plane function element or instance using the path-specific IP addresses or prefixes, or
in the case that different user plane function elements or instances are used for the different access paths, the at least one user plane session is established to one user plane function element or instance using one path-specific IP address or prefix and to another user plane function element or instance using another path-specific IP address or prefix.

15. A method of a user plane function element or instance in a mobile communication system, comprising:
obtaining forwarding action rules for access traffic multipath communication in at least one user plane session from a session management function element or instance, and
assisting establishment of the at least one user plane session for access traffic multipath communication across multiple accesses via different access paths between a communication function element or instance and the user plane function element or instance, wherein an external steering function element or instance, located outside of and connected to the user plane function element or instance, is to be used for steering access traffic multipath communication in the at least one user plane session, by terminating at least one of the access paths based on the forwarding action rules.

16. The method according to claim 15, further comprising:
allocating path-specific IP addresses or prefixes for the different access paths, and
providing the path-specific IP addresses or prefixes to the session management function element or instance.

17. The method according to claim 15, further comprising:
allocating a path-specific IP address or prefix for one of the different access paths, and
providing the path-specific IP address or prefix to the session management function element or instance.

18. The method according to any one of claims 15 to 17, further comprising:
providing capability information indicating whether the user plane function element or instance supports local steering of the access traffic multipath communication by the user plane function element or instance and/or supports steering of the access traffic multipath communication by an external steering function element or instance.

19. A method of a steering function element or instance in a mobile communication system, comprising:
obtaining multi access rules for access traffic multipath communication in at least one user plane session from a session management function element or instance, and
steering access traffic multipath communication across multiple accesses via different access paths between a communication function element or instance and at least one user plane function element or instance based on the multi access rules,
wherein the steering function element or instance is located outside of and connected to the at least one user plane function element or instance.

20. The method according to claim 19, further comprising:
assisting identification of port and/or IP address information of a port and/or an IP address of the steering function element or instance to be used for the at least one user plane session at the session management function element or instance.

21. The method according to claim 20, said assisting comprising:
receiving a request for an elected port and/or IP address from the session management function element or instance, and providing grant of usage of the elected port and/or IP address to the session management function element or instance when the elected port and/or IP address is usable for access traffic multipath communication in the at least one user plane session, or
receiving a request for assignment of a port and/or IP address from the session management function element or instance, choosing a port and/or IP address which is usable for access traffic multipath communication in the at least one user plane session, and providing assignment of the chosen port and/or IP address to the session management function element or instance.

22. The method according to any one of claims 19 to 21, further comprising:
obtaining path-specific IP addresses or prefixes for the different access paths from the session management function element or instance.

23. An apparatus of a session management function element or instance in a mobile communication system, comprising:
means for initiating control of establishment of at least one user plane session for access traffic multipath communication across multiple accesses via different access paths between a communication function element or instance and at least one user plane function element or instance,
means for obtaining communication information of an external steering function element or instance to be used for steering access traffic multipath communication in the at least one user plane session, said external steering function element or instance located outside of and connected to the at least one user plane function element or instance,
means for creating access traffic multipath communication rules, forwarding action rules and multi access rules for access traffic multipath communication in the at least one user plane session, and
means for providing the access traffic multipath communication rules and the communication information of the external steering function element or instance to the communication function element or instance, the forwarding action rules to the at least one user plane function element or instance, and the multi access rules to the steering function element or instance.

24. An apparatus of a communication function element or instance in a mobile communication system, comprising:
means for requesting establishment of at least one user plane session for access traffic multipath communication across multiple accesses via different access paths between the communication function element or instance and at least one user plane function element or instance,
means for obtaining access traffic multipath communication rules for access traffic multipath communication in the at least one user plane session and communication information of an external steering function element or instance, which is to be used for steering access traffic multipath communication in the at least one user plane session and is located outside of and connected to the at least one user plane function element or instance, from a session management function element or instance, and
means for establishing the at least one user plane session based on the access traffic multipath communication rules and the communication information of the external steering function element or instance.

25. An apparatus of a user plane function element or instance in a mobile communication system, comprising:
means for obtaining forwarding action rules for access traffic multipath communication in at least one user plane session from a session management function element or instance, and
means for assisting establishment of the at least one user plane session for access traffic multipath communication across multiple accesses via different access paths between a communication function element or instance and the user plane function element or instance, wherein an external steering function element or instance, located outside of and connected to the user plane function element or instance, is to be used for steering access traffic multipath communication in the at least one user plane session, by terminating at least one of the access paths based on the forwarding action rules.

26. An apparatus of a steering function element or instance in a mobile communication system, comprising:
means for obtaining multi access rules for access traffic multipath communication in at least one user plane session from a session management function element or instance, and
means for steering access traffic multipath communication across multiple accesses via different access paths between a communication function element or instance and at least one user plane function element or instance based on the multi access rules,
wherein the steering function element or instance is located outside of and connected to the at least one user plane function element or instance.

27. A computer program product comprising computer program code which, when the computer program code is executed on a computer, is configured to cause the computer to carry out the method according to any one of claims 1 to 10 or any one of claims 11 to 14 or any one of claims 15 to 18 or any one of claims 19 to 22.
